Europäisches Patentamt

European Patent Office

Office européen des brevets

(11) Veröffentlichungsnummer: **0 096 411**
**B1**

# (12) EUROPÄISCHE PATENTSCHRIFT

(45) Veröffentlichungstag der Patentschrift:
03.05.89

(21) Anmeldenummer: 83105552.0

(22) Anmeldetag: 06.06.83

(51) Int. Cl.⁴: **G 05 B 19/18,** B 24 B 1/00,
B 24 B 53/00

(54) Abricht-Schleifverfahren für elektronisch gesteuerte Schleifmaschinen.

(30) Priorität: 05.06.82 DE 3221397

(43) Veröffentlichungstag der Anmeldung:
21.12.83 Patentblatt 83/51

(45) Bekanntmachung des Hinweises auf die Patenterteilung:
03.05.89 Patentblatt 89/18

(84) Benannte Vertragsstaaten:
CH DE FR GB IT LI

(56) Entgegenhaltungen:
US-A- 3 646 593
US-A- 3 698 138
US-A- 4 222 362

Technisches Zentralblatt für praktische Metallverarbeitung, 70(1976)s 197-203.

(73) Patentinhaber: Lang, Werner Gerhard,
Edmund-Lang-Strasse 34, D-6113 Babenhausen (DE)

(72) Erfinder: Saljé, Ernst, Prof. Dr.-Ing., Steintorwall 12,
D-3300 Braunschweig (DE)

(74) Vertreter: Zinngrebe, Horst, Dr.rer.nat.,
Saalbaustrasse 11, D-6100 Darmstadt (DE)

## Beschreibung

Von HOWES: The Technique of Dressing During Grinding Proceedings, veröffentlicht in International Conference on Creep-feed Grinding, Bristol 1979, ist vorgeschlagen worden, während des Schleifens abzurichten.

Der Vorteil des Abrichtens während des Schleifens ist der, daß sowohl das Profil, d.h. die Genauigkeit der Schleifscheibe, als auch ihre Schärfe, d.h. ihre Schneidfähigkeit, erhalten bleiben. Das Abrichten während des Schleifens ist aber vorwiegend mit Diamantprofilabrichtrollen durchführbar. Abstumpferscheinungen werden damit eliminiert. Profilabweichungen, die als Fehler erster Ordnung am Werkstück wiederzufinden sind, treten nicht mehr auf. Die Standzeit im Schleifprozeß ist theoretisch unendlich groß, Abrichtzeiten im üblichen Sinne entfallen.

Beim Abrichten während des Schleifens besitzt die Schleifscheibentopographie eine der Wirkrauhtiefe $R_{ts}$ entsprechende Rauhigkeit. Zeitliche Veränderungen der Schleifscheibentopographie, die bei gewöhnlichen Schleifprozessen u.a. mit der Zeitkonstante $T_s$ beschrieben werden können, treten beim Abrichten während des Schleifens nicht auf. Mit anderen Worten: Die Wirkrauhtiefen $R_{ts}$, die bekanntermaßen als Maßstab für die Scheibentopographie angesehen werden können, bewegen sich beim Abrichten während des Schleifens auf der Achse $t_c = 0$. Bisher wurden Abrichtprozesse, die während des Schleifens ablaufen, mit konstanter Abrichtvorschubgeschwindigkeit durchgeführt. Es galt somit die Beziehung $v_{frd} = a_{ed} n_s(t)$, wobei $v_{frd}$ die Abrichtvorschubgeschwindigkeit der Abrichtrolle relativ zur Schleifscheibe, $a_{ed}$ die Abrichtzustellung pro Schleifscheibenumdrehung und $n_s(t)$ die Drehzahl der Schleifscheibe bedeuten. Die Drehzahl der Schleifscheibe $n_s(t)$ ist verstellbar, um die Schleifgeschwindigkeit bei sinkendem Schleifscheibendurchmesser $d_s(t)$ konstant zu halten.

In der US-A-4 222 362 ist ein Steuermechanismus für den Antrieb einer Abrichtrolle für die Schleifscheibe einer Schleifmaschine beschrieben, der bei abnehmendem Schleifscheibendurchmesser und dadurch bedingter Erhöhung der Schleifscheibendrehzahl für eine Konstanz des Drehzahlverhältnisses der Abrichtrolle und der Schleifscheibe sorgt.

Bei der in US-A-3 698 138 beschriebenen Schleifmaschine wird der Vorschub des Schleifscheibenträgers in Abhängigkeit von Meßgrößen gesteuert, die den Schleifprozeß bestimmende Parameter repräsentieren. Dazu werden durch Meßeinrichtungen die Abmessungen des Werkstückes sowie der von der Schleifscheibe zu überwindende Schleifwiderstand erfaßt und der Vorschub des Schleifscheibenträgers so gesteuert, daß der Schleifwiderstand bei einem vorgegebenen, vom Schleifprozeß bestimmten Wert verbleibt.

In der Veröffentlichung «Technisches Zentralblatt für praktische Metallverarbeitung», 70. Jahrgang, 1976, Heft 6, Seiten 197–103 wird ein Schärfen von Räumwerkzeugen durch eine programmierbare Steuerung beschrieben, bei der ein Rechner in Abhängigkeit von Rückmeldungen vom Schleifscheibenantrieb und von frei programmierten Sollwerten die Verstellung der relativen Lage von Schleifscheibe und Werkstück durch Ausführung der notwendigen mathematischen Rechenoperationen ermittelt und den Schleifscheibenantrieb entsprechend steuert.

In US-A-3 646 593 wird eine Schärfmaschine für Räumwerkzeuge beschrieben, die von einem Rechner gesteuert ist, wobei die vom Rechner ermittelten Ist-Positionen jeweils nur Endlagen der Schleifscheibe betreffen.

Der Erfindung liegt die Aufgabe zugrunde, die Wirkrauhtiefe während des Schleifprozesses zu erhalten, wobei die Rollendrehzahl wählbar sein und die Zustellung der Abrichtrolle gegen die Schleifscheibe kontinuierlich erfolgen soll. Die Lösung gelingt mit dem in Anspruch 1 gekennzeichneten Verfahren.

Die in der Abrichtvorschubgeschwindigkeit $v_{frd} = a_{ed} \cdot n_s(t)$ enthaltene Zustellung $a_{ed}$ und der Geschwindigkeitsquotient $q_d$ bestimmen beim Abrichten mit Diamantprofilrolle die Ausgangswirkrauhtiefe $R_{tso}$. Die Ausgangswirkrauhtiefe $R_{tso}$ muß dem Schleifprozeß, der dem Abrichtprozeß folgt (in diesem Fall nach längstens einer Schleifscheibenumdrehung), angepaßt sein.

Beim Abrichten während des Schleifens ist die sich einstellende Abricht-Scheibentopographie, die bekanntlich durch die Wirkrauhtiefe $R_{ts}$ gut beschrieben werden kann, gleichzeitig die für den Schleifprozeß wirksam werdende Topographie. Beim Abrichten während des Schleifens lassen sich somit über kinematische Abrichteinstellgrößen ($q_d$ und $a_{ed}$) die für Schleifprozesse zweckmäßigen und erforderlichen Topographien erzeugen. Es kann dann erforderlich werden – z.B. im Laufe von Schleifzyklen –, den Geschwindigkeitsquotienten $q_d$ oder die Abrichtzustellung

$$a_{ed} = \frac{v_{frd(t)}}{n_s(t)}$$

bestimmten Funktionen der Zeit oder der Werkstückabmessungen folgen zu lassen. Durch sinnvolle Steuerung der Abrichtzustellung $a_{ed}$ lassen sich durch das Abrichten sonst verlorengehende Scheibenvolumina einsparen, oder durch Geschwindigkeitsquotienten $q_d$ nahe $+1$ können gute Voraussetzungen für hohe Grenzzeitspanvolumina geschaffen werden.

Mit dem radialen Abrichtvorschubweg $1_{frd}(t) = a_{ed} \cdot n_s(t) \cdot t_d$, wobei $t_c = t_d$ die Schleif- bzw. Abrichtzeit bedeuten, ändert sich der Schleifscheibendurchmesser $d_s(t)$. Um den Wirkpunkt bzw. die Wirklinie zwischen Schleifscheibe und Werkstück, von dem bzw. von der die Werkstückabmessungen beeinflußt werden, in erforderlicher Weise zu steuern, ist es notwendig, die Abrichtrollenvorschubbewegung und die dazugehörende Schleifscheibenvorschubbewegung aufeinander abzustimmen.

Dieses übernimmt zweckmäßigerweise ein Kleinrechner, der von Einstell- und Meßgrößen gespeist wird.

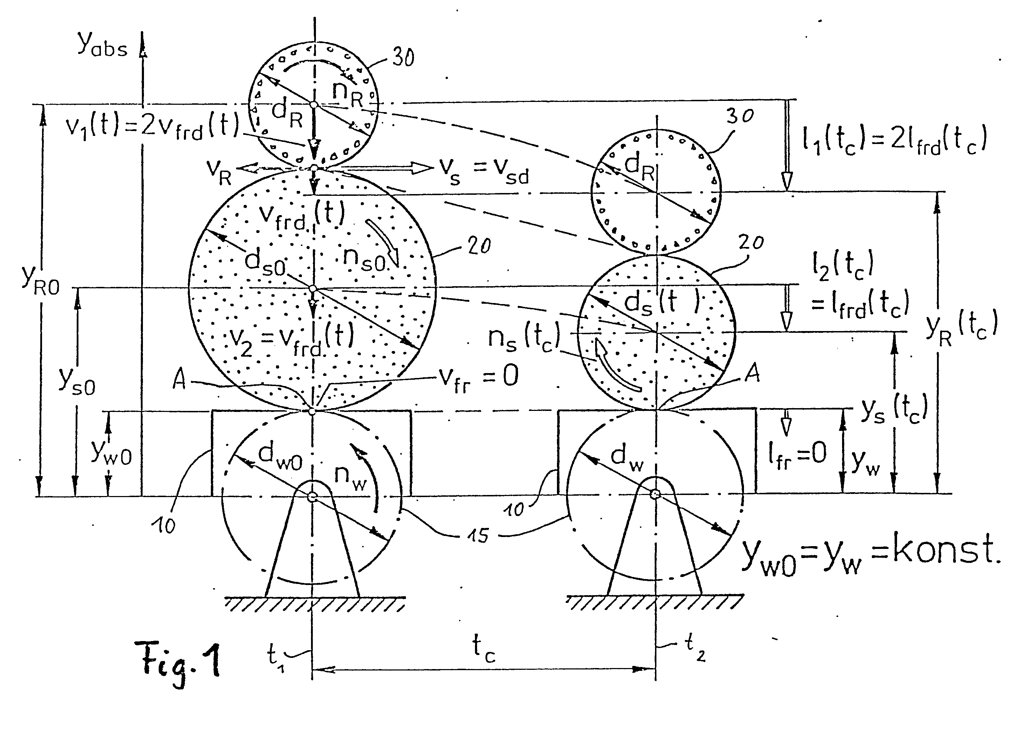

Anhand einiger Beispiele sei erläutert, wie Vorschubbewegungen und Vorschubgeschwindigkeiten von Abrichtrolle und Schleifscheibe beim Plan- und Außenrundeinstechschleifen aufeinander abgestimmt werden können (s. hierzu Fig. 1–4).

Fig. 1 zeigt schematisch die Zustellung einer Abrichtrolle 30 und einer Schleifscheibe 20 in Bezug auf ein Werkstück, das entweder ein plan zu schleifender Quader 10 oder eine rund zu schleifende Scheibe 15 sein kann. Die Zustellung ist zum Zeitpunkt t = 0, d.h. zu Beginn des Schleifens und zum Zeitpunkt t = $t_c$ dargestellt. Es sei zunächst vorausgesetzt, daß der Wirkpunkt A der Schleifscheibe 20 auf gleicher Höhe des Werkstücks 10, 15 liegenbleibt. Die Maschinenkoordinaten

$$y_{s0}$$

und

$$y_{R0}$$

beziehen sich auf die Lage der Abrichtrolle 30, der Schleifscheibe 20 und des Werkstücks 10, 15 im Ausgangsstadium. Für den Fall, daß $y_w(t) = y_w =$ konstant ist, wird vom Werkstück 10, 15 in die Tiefe gemessen nichts abgeschliffen. Es ist $l_{fr}(t) = l_{fr} = 0$. Ein solcher Fall kann auftreten beispielsweise beim Plantiefschleifen. Bei allen Betrachtungen, die jetzt angestellt werden, sei davon ausgegangen, daß die Abrichtzustellung $a_{ed}$ konstant ist. Ferner sei gegeben eine konstante Abrichtrollendrehzahl. Beim Schleifen sei vorausgesetzt, daß die Schleifgeschwindigkeit $v_c = v_s =$ konstant ist. Es gilt somit:

$$v_s = v_{sd} = d_s(t) \cdot \pi \cdot n_s(t) \qquad (Gl. 1)$$

wobei $d_s(t)$ der Durchmesser und $v_{sd}$ die Umfangsgeschwindigkeit der Schleifscheibe 20 beim Abrichten sind.

Zum Zeitpunkt t = 0 gilt dann:

$$v_{frd_0} = a_{ed} \cdot n_{s_0} \; ; \; n_{s_0} = v_{sd} \frac{1}{\pi \cdot d_{s_0}} \qquad (Gl. 2)$$

wobei die weiteren Indices 0 sich auf t = 0 beziehen.

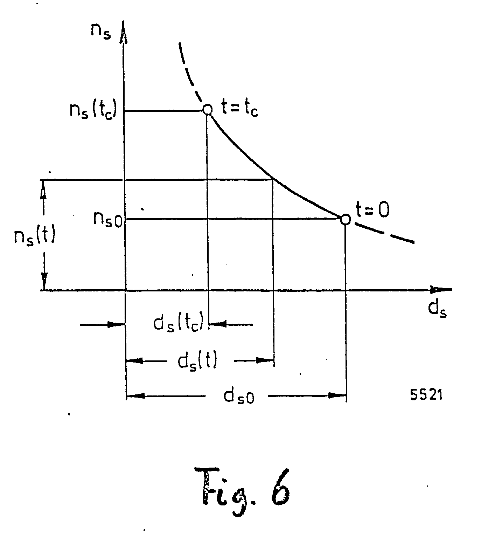

Mit der Bedingung konstanter Schnittgeschwindigkeit ergibt sich zwischen der Schleifscheibendrehzahl $n_s(t)$ und dem Schleifscheibendurchmesser $d_s(t)$ ein hyperbolischer Zusammenhang, wie er in Fig. 6 dargestellt ist.

$$n_s(t) = \frac{v_s}{\pi \cdot d_s(t)} = \frac{v_{sd}}{\pi \cdot d_s(t)} \qquad (Gl. 3)$$

Ein hyperbolischer Zusammenhang zwischen $n_s(t)$ und $d_s(t)$ ergibt zusammen mit der Forderung nach konstanter Abrichtzustellung $a_{ed}$ für die radiale Vorschubgeschwindigkeit der Abrichtrolle 30 relativ zur Schleifscheibe 20 $v_{frd}(t)$ sowie den entsprechend radialen Vorschubweg $l_{frd}(t)$ nichtlineare Beziehungen. Für $v_{frd}(t)$ gilt mit obiger Gleichung:

$$V_{frd}(t) = n_s(t) \cdot a_{ed} = \frac{v_{sd} \cdot a_{ed}}{\pi \cdot d_s(t)} \qquad (Gl. 4)$$

Andererseits ist $v_{frd}(t)$ die halbe zeitliche Änderung des Schleifscheibendurchmessers beim Abrichten:

$$v_{frd}(t) = -0.5 \cdot \frac{dd_s(t)}{dt} \qquad (Gl. 5)$$

Durch Elimination von $v_{frd}(t)$ ergibt sich aus (Gl. 4) und (Gl. 5) nach Integration zunächst der Schleifscheibendurchmesser als Funktion der Zeit:

$$d_s(t) = \sqrt{\frac{-4a_{ed} \cdot v_{sd}}{\pi} \cdot t + d_{so}^2} \qquad (Gl. 6)$$

Ableiten von $d_s(t)$ entsprechend (Gl. 5) liefert nun:

$$v_{frd}(t) = \frac{a_{ed} \cdot v_{sd}}{\pi \cdot \sqrt{\frac{-4a_{ed} \, v_{sd}}{\pi} \cdot t + d_{so}^2}} \qquad (Gl. 7)$$

Der radiale Vorschubweg $l_{frd}(t)$ der Abrichtrolle 30 relativ zur Schleifscheibe 20 ergibt sich aus dem Schleifscheibendurchmesser mit (Gl. 6) zu

$$1_{frd}(t) = 0.5(d_{so} - d_s(t)) = 0.5\left(d_{so} - \sqrt{\frac{-4a_{ed} \cdot v_{sd}}{\pi} \cdot t + d_{so}^2}\right)$$

$$(Gl. 8)$$

Nach der Schleifzeit t = $t_c$ wird ein absoluter Vorschubweg der Abrichtrolle 30 vom Betrage $l_1(t_c) = 2l_{frd}(t_c)$ und ein Ausgleichsweg der Schleifscheibe $l_2(t_c) = l_{frd}(t_c)$ zurückgelegt.

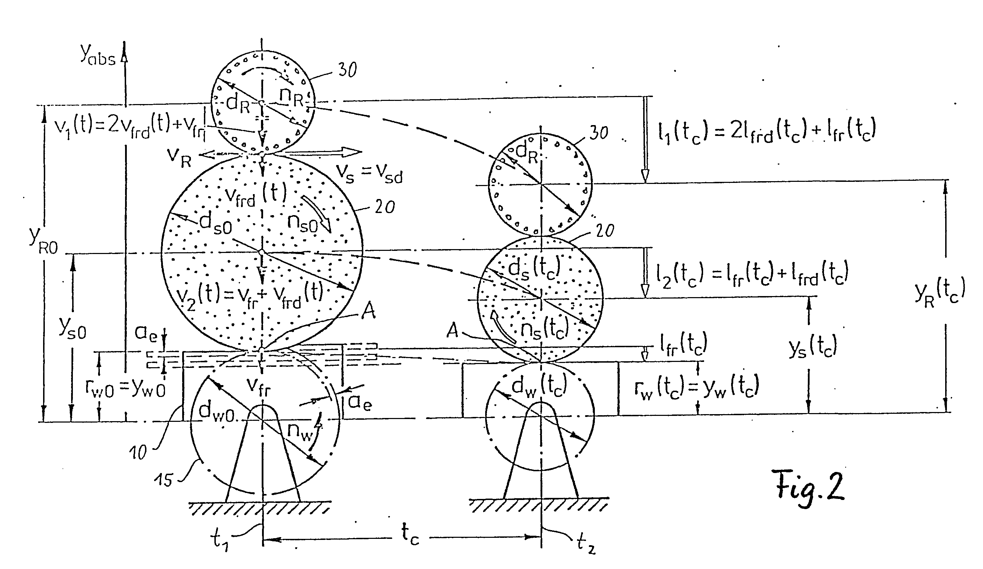

Mit Fig. 2, welche Fig. 1 analog ist, wird davon ausgegangen, daß sich die Werkstückabmessung ändert, mit anderen Worten, daß die Höhe $y_w(t)$ des Werkstückes 10 beim Flachschleifen oder der Radius $r_w(t)$ des Werkstückes 15 beim Rundschleifen als Funktion der Zeit heruntergeschliffen wird. Das bedeutet, anders ausgedrückt, daß der Wirkpunkt A mit der Ursprungskoordinate $r_{wo}$ bzw. $y_{wo}$ verschoben wird.

Figur 2 entsteht aus Figur 1 durch Superposition des Vorschubweges $l_{fr}(t)$ und es wird

$$y_w(t) = y_{wo} - l_{fr}(t)$$

Es ergeben sich nun der absolute Vorschubweg $l_1(t)$ der Abrichtrolle 30, der absolute Vorschubweg $l_2(t)$ der Schleifscheibe 20 und der eigentliche Vorschubweg $l_{fr}(t)$ am Werkstück 10, 15. Die Absolutbeträge der Momentangeschwindigkeiten $v_1(t)$ und $v_2(t)$ lassen sich aus Figur 2 und Figur 1 ablesen als die Neigung der Mittelpunktbahnen von Abrichtrolle und Schleifscheibe.

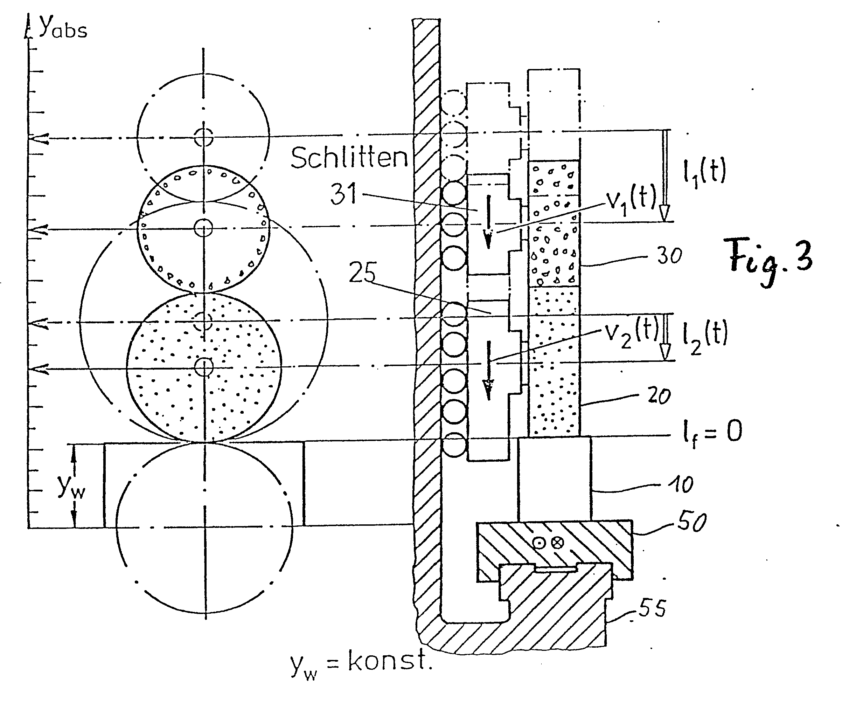

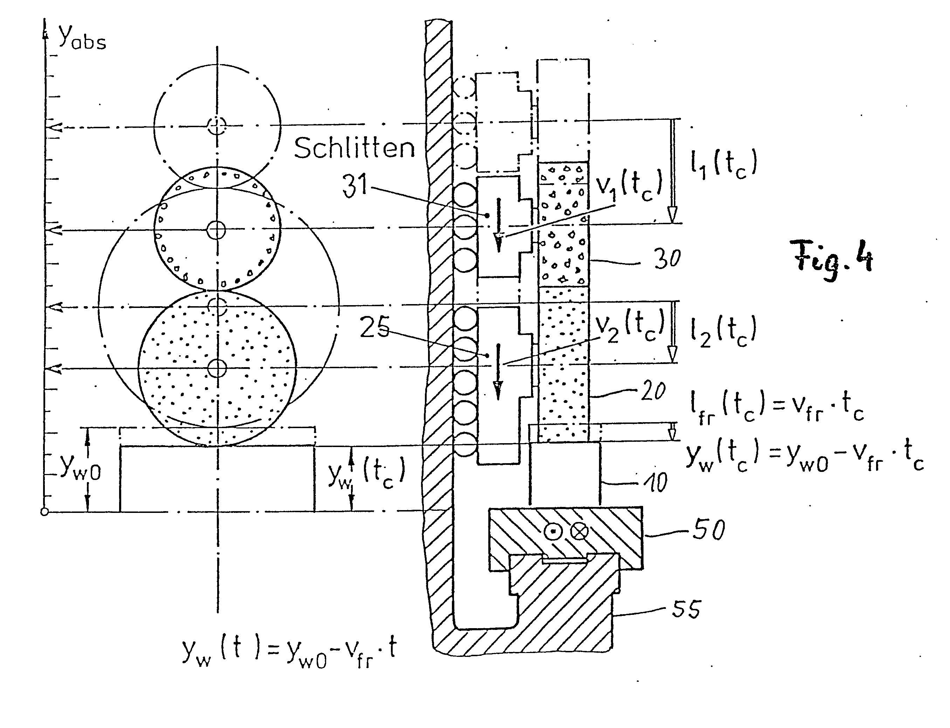

Die Fig. 3 und 4 geben einen Überblick über die Konstruktion. Auf dem Längsschlitten 50 einer Schleifmaschine mit Gestell 55 ist das Werkstück 10 eingerichtet und festgespannt, welches von der Schleifscheibe 20 geschliffen werden soll. Die Schleifscheibe 20 und die Abrichtrolle 30, die während des Schleifens ständig miteinander in Eingriff stehen, sind je auf einem Schlitten 25, 31 montiert, wobei beide Schlitten 25, 31 beispielhaft übereinander angeordnet und im Gestell 55 vertikal beweglich geführt sind. Hier ist eine Darstellung gewählt, bei der beide Schlitten 31 und 25 sowohl für die Diamantabrichtrolle 30 als auch für die Schleifscheibe 20 getrennt geführt sind und somit gegenüber der Vertikalkoordinate y des Gestells 55 absolute Bewegungen ausführen können. Denkbar sind konstruktive Anordnungen, bei denen der Schlitten 31 mit der Abrichtrolle 30 sich relativ zum Schlitten 25 der Schleifscheibe 20 bewegt, d.h. auf diesem angeordnet ist. Prinzipiell sind weitere kinematische Lösungen denkbar, die aber ohne prinzipiellen Einfluß auf die absolut zurückzulegenden Vorschubwege und Geschwindigkeiten bleiben, so daß hier nur eine Anordnung beschrieben werden soll.

Dargestellt ist der Zeitpunkt $t = t_c$, strichpunktiert der Beginn des Schleifens $t = 0$. Während sich die Werkstückabmessung in Fig. 3 nicht ändert, d.h. $l_{fr} = 0$, wird in Fig. 4 das Werkstück als Funktion der Zeit heruntergeschliffen.

Aus Gründen der Übersichtlichkeit ist in den Fig. 3 und 4 der Rundkörper (Werkstück) für das Rundschleifen nicht eingezeichnet. Es versteht sich jedoch, daß vorstehende Lehre sich in gleicher Weise auf das Rundschleifen eines Werkstücks anwenden läßt. Dies ist deutlich aus Fig. 5 zu erkennen, in welcher außer dem planen Werkstück 10 auch ein rundes Werkstück 15 dargestellt ist.

Um den während des Schleifens laufenden Abrichprozeß steuern zu können, müssen die Schleifscheibendurchmesser und die Schlittenlage für die Abrichtrolle 30 und Scheibe 20 bekannt sein. Moderne NC-gesteuerte Schleifmaschinen verfügen über Meßsysteme, mit denen sich die Lage der Schlitten 31, 25 leicht messen läßt.

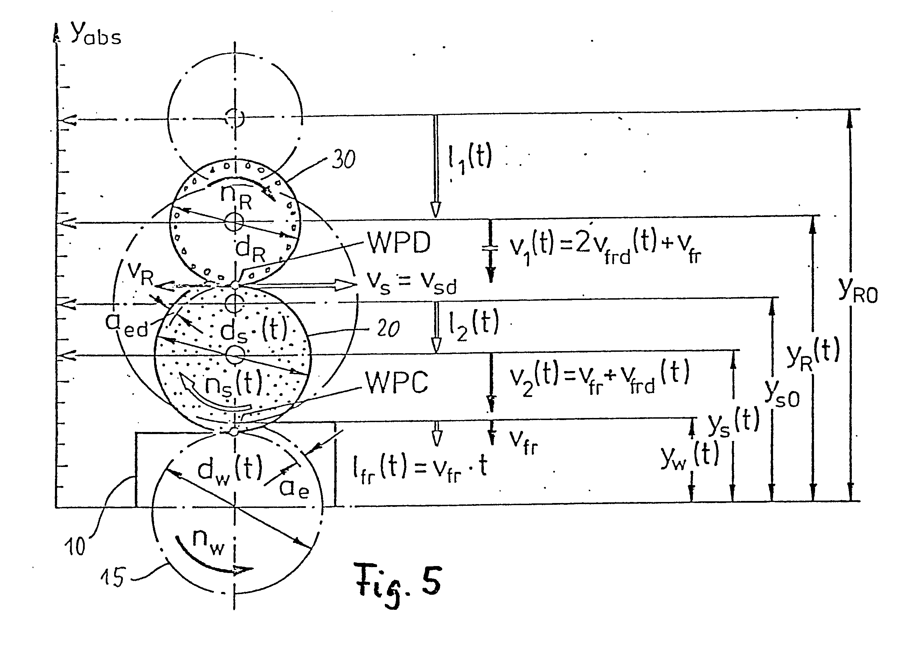

Fig. 5 zeigt die absoluten Maschinenkoordinaten $y_{abs}$, die sich jederzeit in relative Wege umrechnen lassen. Zunächst sollen die hier erläuterten Beispiele mit absoluten Koordinaten betrachtet werden. Im Prinzip ändert sich nichts, wenn auf relative Koordinaten übergegangen wird, z.B. Lage des Abrichtrollenschlittens 31 relativ zur Lage des schleifscheibentragenden Schlittens 25. Die in jedem Augenblick des Abricht- und Schleifprozesses gemessenen Daten der Koordinaten $y_{so}$ und $y_s(t)$ sind Voraussetzungen für den Anschluß eines Mikrorechners, der beispielsweise in jedem Augenblick die erforderliche Einstechgeschwindigkeit $v_{frd}(t)$ für das Abrichtrollengerät mit Abrichtrolle 30 vorgibt. Gleichung 3 liefert eine mathematische Voraussetzung für das Ablaufen dieser beiden Prozesse. Es wird davon ausgegangen, daß die Abrichtrollendrehzahl $\dot{n}_R$ und damit auch die Abrichtrollengeschwindigkeit $v_R$ über einen bestimmten Zeitbereich konstant sind. Mit Verschleiß der Abrichtrolle ist nicht zu rechnen. Sodann wird – wie oben bereits erwähnt – vorausgesetzt, daß die Schleifgeschwindigkeit $v_s$ konstant ist, die aber auch gleichzeitig die Umfangsgeschwindigkeit der Schleifscheibe $v_{sd}$ während des Abrichtens wird.

Aus den Koordinaten $y_s(t) = y_s(t) = r_s(t) = \dfrac{d_s(t)}{2}$ ist der Schleifscheibendurchmesser berechenbar. Der Schleifscheibendurchmesser $d_s(t)$ ergibt sich aber auch aus dem Meßsystem zu

$$d_s(t) = 2\,(y_s(t) - y_w(t)) \qquad \text{(Gl. 9)}$$

Somit gilt unter Zusammenfassung der vorher genannten Beziehungen (4) und (9)

$$v_{frd}(t)\ 0\ \frac{a_{ed} \cdot v_{sd}}{2\pi(y_s(t) - y_w(t))} \qquad \text{(Gl. 10)}$$

Aus der Bedingung konstanter Schleif- und Schleifscheibenabrichtumfangsgeschwindigkeit ergibt sich die Gleichung 11

$$n_s(t) = \frac{v_s}{\pi} \cdot \frac{1}{2(y_s(t) - y_w(t))} \qquad \text{(Gl. 11)}$$

Die meßbaren Koordinaten $y_s(t)$, $y_R(t)$ geben die Möglichkeit zu einer Kontrolle. Während des Abricht- und Schleifprozesses muß nämlich sein

$$y_R(t) = y_s(t) + d_R/2 + d_s(t)/2 \qquad \text{(Gl. 12)}$$

Aus den Festlegungen für $v_R$ und $v_{sd}$ berechnet sich der für das Abrichten mit der Rolle wichtige Geschwindigkeitsquotient $q_d$. Führt man die schon erwähnten Koordinaten ein, so ergibt sich eine Beziehung für $q_d$ nach Gleichung

$$q_d = \frac{v_R}{v_{sd}} = \frac{v_R}{n_s(t)\pi 2(y_s(t) - y_w(t))} \qquad \text{(Gl. 13)}$$

Es zeigt sich, daß nunmehr alle wichtigen Daten für den Abrichtprozeß während des Schleifens abhängig von Ausgangsbedingungen (Index 0) und den jeweils anliegenden Koordinaten berechnet werden können. Berechenbar sind neben $v_{frd}(t)$ aus Gleichung 10 und der Kontrollgröße $y_R(t)$ aus Gleichung 12 und dem Geschwindigkeitsquotienten zum Abrichten $q_d$ aus Gleichung 13 die erforderliche Scheibendrehzahl $n_s(t)$. Diese ist mit Gleichung 11 beschrieben.

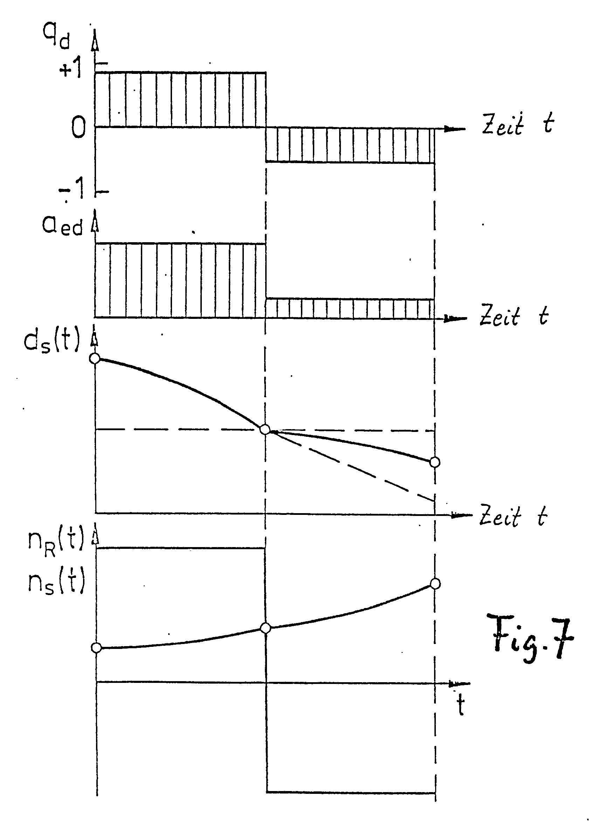

Im Prinzip gelten die dargelegten Überlegungen auch für mehrstufig ablaufende Schleifprozesse. Es kann dann z.B. $q_d$ oder $a_{ed}$ als Funktion der Zeit oder abhängig vom Zustand des Schleifprozesses z.B. auch von der Abmessung des Werkstückes verändert werden. Fig. 7 zeigt ein solches prinzipielles Verändern von $q_d$ und $a_{ed}$ als Funktion der Zeit.

Änderungen von $q_d$ und $a_{ed}$ sind dann nötig, wenn die Abrichtbedingungen einem zeitabhängigen Prozeßablauf des Schleifens angepaßt werden sollen. So ist z.B. als nützlich anzusehen, im Schruppvorgang ein $q_d$ zu wählen, welches nahe +1 liegt. Damit ergibt sich eine große Wirkrauhtiefe, die bestens zum Schruppen geeignet ist, und auch die Abrichtzustellung $a_{ed}$ kann groß gewählt werden. Wenn anschließend geschlichtet werden soll, wird man zweckmäßigerweise $q_d$ auf einen negativen Wert hin auslegen, kleiner als 0, und $a_{ed}$ reduzieren und Schleifscheibenvolumen einsparen. Darüber hinaus bringt die Erfindung den Vorteil, daß die Abrichtrolle über einen in der Drehzahl verstellbaren Motor angetrieben werden kann.

In der vorstehenden Beschreibung bezieht sich der Index s auf die Schleifscheibe, der Index R auf die Abrichtrolle, der Index d auf das Abrichten (dressing) und der Index f auf die Zustellung (feed).

In Gleichung 4 und in Gleichungen 5 und 6 kommt der Schleifscheibendurchmesser $d_s(t)$ oder die Koordinaten-Differenz $y_s(t) - y_w(t)$ als Funktion der Schleifzeit t vor. Mit den Koordinatenmaßen, die sich bei NC-gesteuerten Schleifmaschinensystemen mit Hilfe des vorhandenen Meßsystems leicht herausfinden lassen, kann z.B. in jedem Augenblick der Schleifscheibendurchmesser berechnet werden. Aus dem Schleifscheibendurchmesser sowie $a_{ed}$ und $v_s$ ergibt sich dann z.B. die erforderliche exakte Einstechgeschwindigkeit $v_{frd}$ (Gleichung 4). Bei dieser indirekten Messung von $d_s(t) = y_s(t) - y_w(t)$ bleiben aber Wärmedeformationen von Schleifspindelstock oder Meßsystem unberücksichtigt. Außerdem sind Fälle denkbar, bei denen sich aus konstruktiven oder wirtschaftlichen Gründen ein Längenmeßsystem für die Lage der Abrichtrolle relativ zur Scheibenachse und somit der Koordinate $y_R(t)$ nicht anbringen läßt.

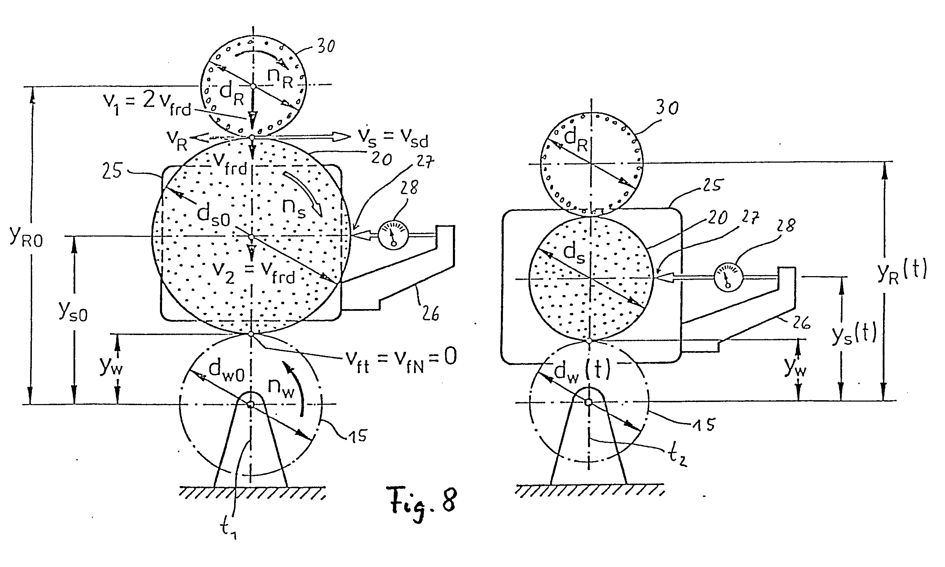

Es ist daher daran zu denken, den Schleifscheibendurchmesser u.U. direkt zu messen. Hierfür existieren bekannte Lösungen. Ein Schleifscheibendurchmesser-Meßverfahren ist z.B. von der Technischen Hochschule Aachen, Prof. König, beschrieben worden. Eine zweite Möglichkeit besteht darin, das Verfahren der Firma MAAG für die Messung der Schleifscheibendurchmesser anzuwenden. Hierbei wird ein sehr kleiner Diamant an die Schleifscheibenkontur herangefahren. Das sich daraus ergebende Signal – das kann ein Körperschallsignal sein oder ein Beschleunigungssignal – läßt sich zu Meßzwecken ausnutzen. In Figur 8, deren Darstellung derjenigen aus den Figuren 1 und 2 entspricht, ist am Schlitten 25 der Schleifscheibe 20 ein Arm 26 befestigt, der eine Meßeinrichtung 28 trägt. Die Diamantspitze 27 der Meßeinrichtung 28 steht ständig im Kontakt mit der Peripherie der Schleifscheibe 20, so daß die Meßeinrichtung 20 die Abnahme des Durchmessers der Schleifscheibe 20 kontinuierlich erfaßt und als Ausgangssignal für die Steuerung des Abrichtrollenvorschubs bereitstellt.

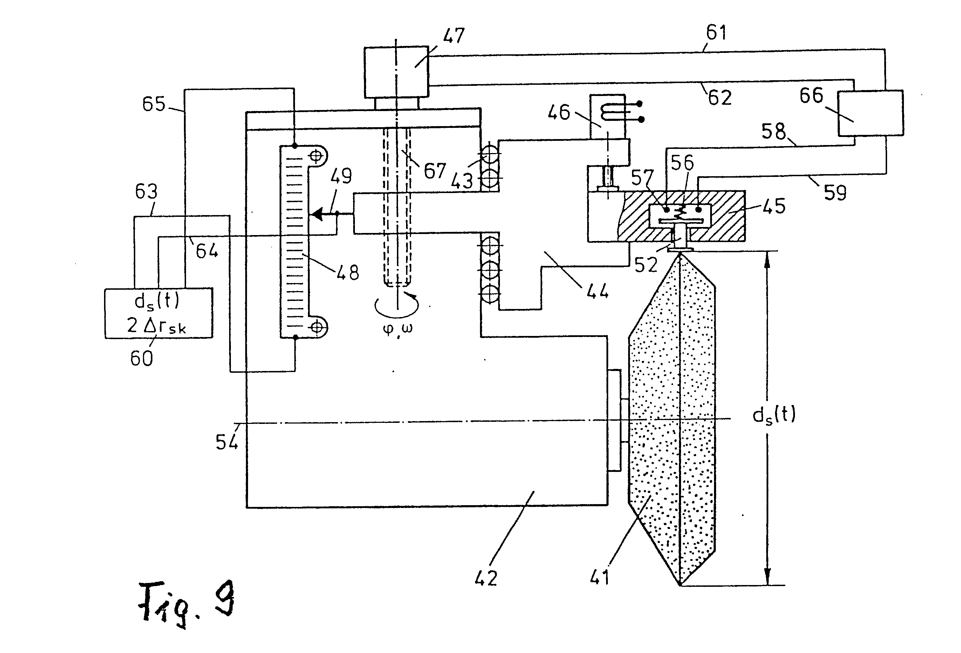

Fig. 9 zeigt eine Einrichtung zum Erfassen des Schleifscheibendurchmessers. In einem Spindelkasten 42 ist eine Doppelkegel-Schleifscheibe 41 um eine strichpunktiert dargestellte Achse 54 drehbar gelagert. Im oberen Teil ist der Spindelkasten 42 mit axial einwärts abgesetzten, quer zur Achse 54 gerichteten Bahnen 55 ausgerüstet. Auf den Bahnen 55 ist quer zur Achse 54 mittels einer Geradführung 43 ein Meßschlitten 44 verschiebbar, der von einem schematisch über dem Spindelkasten 42 eingezeichneten Motor 47 auf die Schleifscheibe 41 zugeschoben und wieder zurückgezogen werden kann. In dem Meßschlitten 44 ist im Gehäuse 45 ein Taster 52 unter der Wirkung eines Hubmagneten 46 radial zur Schleifscheibe 41 bewegbar. Der von einer Feder 56 im Gehäuse 45 beaufschlagte Taster 52 steht aus dem Gehäuse 45 vor und ist in seinem inneren Abschnitt als kapazitiver Näherungsschalter ausgebildet. Mit dem Näherungsschalter 57 sind Ausgangsleitungen 58, 59 verbunden, die zu einem Regler 66 führen. Die Ausgangsleitungen 61, 62 des Reglers 66 sind mit dem Vorschubmotor 47 für den Meßschlitten 44 verbunden.

Ein rückwärtiger Arm des Meßschlittens 44 ist mit einem Fotodioden-Meßkopf 49 oder dgl. versehen, der einen am Spindelkasten 42 fest angebrachten Linearmaßstab 48 abtastet. Der Linearmaßstab 48 liegt in einer Eingangsleitung 63, 65 einer Verarbeitungseinheit 60, zu deren weiterem Eingang eine mit dem Meßkopf 49 verbundene Eingangsleitung 64 führt. Die Verarbeitungseinheit 60 ermittelt aus den auf Leitungen 63, 64, 65 aufgenommenen Signalen, die die relative Lage des Meßschlittens 44 relativ zum Spindelkasten 42 und damit zur Scheibe 41 repräsentieren, den aktuellen Durchmesser $d_s(t)$. Der Elektromotor 47 treibt eine Spindel 67, die ihrerseits mit dem Meßschlitten 44 gekoppelt ist, so daß durch Rotation der Spindel 67 der Meßschlitten 44 in der erwähnten Weise auf der Geradführung 43 bewegt werden kann.

Wenn der Meßschlitten 44 mit einer bestimmten Vorschubgeschwindigkeit, die der Winkelgeschwindigkeit der Spindel 67 proportional ist, auf die Schleifscheibe 41 zubewegt wird, dreht sich die Spindel 67 um einen bestimmten Winkel φ. Wenn die Schleifscheibe 41 vom Taster 42 an den äußersten Punkten der Schleifscheibe 41 berührt wird, entsteht bei weiterem Vorschub des Meßschlittens 44 auf den Leitungen 58, 59 ein Signal, dessen Zeitverlauf einer Sprungfunktion entspricht. Dieses Signal wird vom Regler 66 aufgenommen und als ein den Elektromotor 47 stillsetzendes Ausgangssignal diesem über Leitungen 61, 62 zugeführt. Bei stillgesetztem Meßschlitten 44 nimmt die Verarbeitungseinheit 60 vom Meßkopf 49 ein dessen relative Lage zum Linearmaßstab 48 und damit zur Schleifscheibe 41 repräsentierendes Signal auf und ermittelt daraus den aktuellen Durchmesser der Schleifscheibe. Wenn zu zwei definierten Zeitpunkten nacheinander auf diese Weise der Durchmesser der Schleifscheibe 41 an deren äussersten Punkten gemessen worden ist, berechnet die Verarbeitungseinheit 60 aus den aufgenommenen Signalen den Wert des sogenannten Kantenverschleißes $\Delta r_{sk}$.

Statt eines kapazitiven Tasters 52 kann auch ein Körperschallmeßgerät benutzt werden, dessen Ausgangssignal vom Regler 66 aufgenommen wird.

Adaptive Regelungen für CD-Abrichtsysteme

Beim Ablauf von Schleif- und Abrichtprozessen muß davon ausgegangen werden, daß Störgrößen auftreten, die stochastisch auf den Ablauf der Prozesse einwirken können. Eine Störgröße kann z.B. die der Inhomogenität oder der unterschiedlichen Bearbeitungszugabe des Werkstückes sein. Aus Störgrößen ergeben sich z.B. schwankende Schnittkräfte, gegebenenfalls aber auch unterschiedliche Schleifbarkeit des Werkstückstoffes. Beim Abrichten nach der Methode CD (continuous dressing = kontinuierliches Abrichten) kommt es u.a. darauf an, daß möglichst wenig Schleifscheibenvolumen abgerichtet wird. Der Abrichtvolumenstrom der Scheibe muß klein sein. Deshalb ist nur soviel von der Schleifscheibe abzurichten, daß sie gerade noch scharf und profilhaltig bleibt.

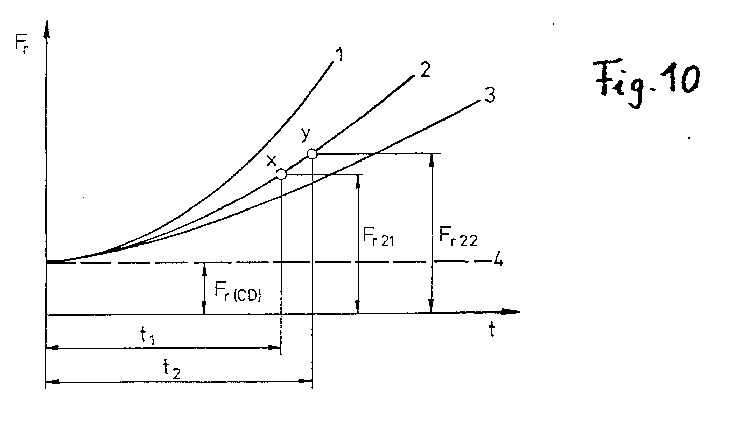

In vielen Tiefschleifversuchen hat sich herausgestellt, daß die Radialkraft $F_r$ oder die Normalkraft ($F_n$) als Funktion der Zeit ansteigt. Der Anstieg dieser Radial- oder Normalkraft ist als Folge eines Abstumpfungs- oder Zusetzeffektes beim Schleifen anzusehen. Die Scheibe verliert ihre Schärfe. Mit CD-Abrichtverfahren bleiben die Radialkräfte annähernd konstant. Ein solcher typischer Verlauf ist mit Fig. 10 dargestellt. Es zeigt sich die Radialkraft $F_r$ als Funktion der Zeit mit den Kurven 1, 2, 3, die andeuten, daß verschieden gut schleifbare Stoffe eine ansteigende Kraft als Funktion der Zeit ergeben können. In allen drei Fällen wird kein CD-Abrichtverfahren angewendet. Die gestrichelte Kurve 4 hingegen zeigt den zu erwartenden Verlauf beim CD-Verfahren. Die Schleifscheibe bleibt ständig scharf und somit steigt die Kraft nicht an, sie bleibt als Funktion der Zeit konstant. Nun besteht jedoch ein Schleifscheiben-Abrichtvolumenstrom $Q'_s$, bedingt durch den Abrichtmechanismus, der die Wirtschaftlichkeit ungünstig beeinflußt. Der Volumenstrom $Q'_s$ beim Abrichten pro Millimeter Schleifscheibenbreite errechnet sich zu

$$Q'_s \sim a_{ed} \cdot V_{sd}$$

Man erkennt, das der Schleifscheibenvolumenstrom $Q'_s$ proportional der Zustellung $a_{ed}$ ist. Die Zustellung $a_{ed}$ ist aber andererseits abhängig von der Vorschubgeschwindigkeit $v_{frd}$ der Abrichtrolle relativ zur Schleifscheibe und umgekehrt proportional der Schleifscheibendrehzahl. Man kann davon ausgehen, daß die Umfangsgeschwindigkeit der Schleifscheibe beim Schleifen und Abrichten konstant gehalten wird. Dies ist z.B. durch die weiter vorn beschriebene Regelung möglich. Die Gleichung für den Abrichtvolumenstrom besagt, daß der Volumenstrom direkt proportional der Vorschubgeschwindigkeit ($v_{frd}$) von Abrichtrolle zur Schleifscheibe ist. Man kann eine Vorschubgeschwindigkeit $v_{frd\,min}$ definieren, bei der die Schleifkraft gerade noch konstant bleibt. Diese gilt es einzuhalten, um den Vorteil des CD-Abrichtens bei minimalem Schleifscheiben-Abrichtvolumenstrom zu erzielen.

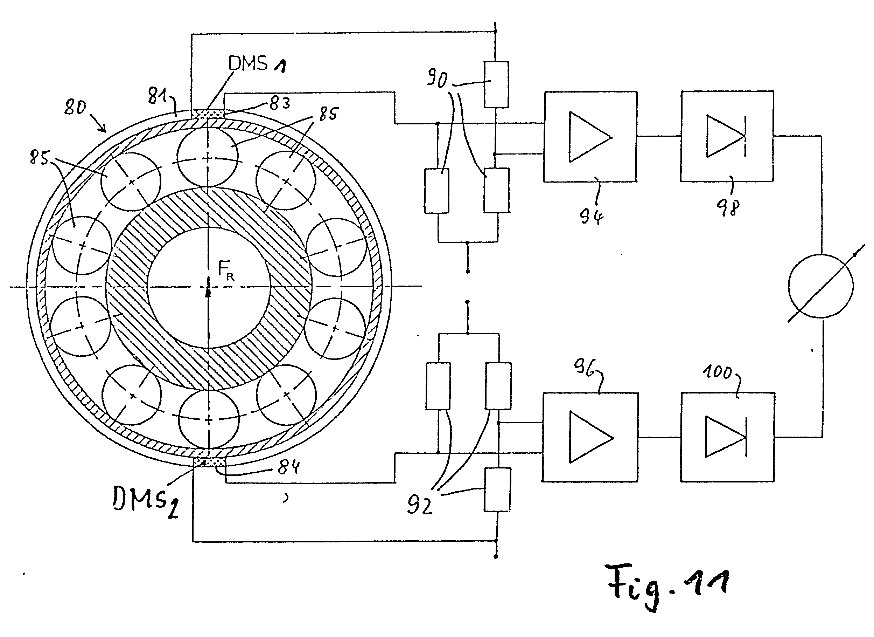

Um die Schleifkraft, die nun als Meßgröße fungieren soll, erfassen zu können, muß eine entsprechende Meßvorrichtung in den Kraftfluß der Maschine eingebaut werden. Dazu läßt sich z.B. das Werkstück über Piezoelemente gegenüber dem Schlitten der Schleifscheibe abstützen. Der Kraftfluß schließt sich dann über die Piezoelemente, sie lassen sich kalibrieren und es läßt sich damit ein Signal gewinnen, welches proportional der Radialkraft ist. Ein anderes Meßprinzip ist in Fig. 11 erläutert, bei dem mit Dehnmeßstreifen im Radial-Wälzlager der Arbeitsspindel die Radialkraft $F_r$ gemessen wird. In den Außenring 81 des Wälzlagers 80 z.B. der Schleifscheibe oder des drehbaren Werkstückes werden über der Wälzkörperlaufbahn zwei Nuten 83, 84 eingeschliffen, in deren Grund Dehnmeßstreifen $DMS_1$, $DMS_2$ geklebt werden. Infolge der Überrollung durch die Wälzkörper 85 entstehen im Lagerring Dehnungen und Stauchungen, die Widerstandsänderungen der Dehnmeßstreifen bewirken. Die Überrollung der Dehnmeßstreifen stellt sich als Wechselspannung dar. Zur Auswertung wird das Signal in einem aktiven Gleichrichter in eine Gleichspannung umgewandelt. Jeder Meßstreifen wird mit Festwiderständen 90, 92 zu einer Vollbrücke ergänzt und die Meßspannungen werden verstärkt (94, 96), gleichgerichtet (98, 100), und es wird in einem Subtrahierer die Differenz gebildet. Die Spannung am Ausgang des Subtrahierers ist dann ein Maß für die Lagerbelastung. Greifen keine äußeren Kräfte an, stellt sich eine Spannung $\Delta U$ infolge des Spindeleigengewichtes ein, die durch eine Nullpunktverschiebung am Subtrahierer beseitigt werden kann. Veränderungen der Überrolldehnungen durch Erwärmung oder hydrodynamische Vorgänge bewirken Spannungsveränderungen gleicher Größe und Richtung an den Gleichrichterausgängen, die sich bei der elektrischen Differenzbildung aufheben.

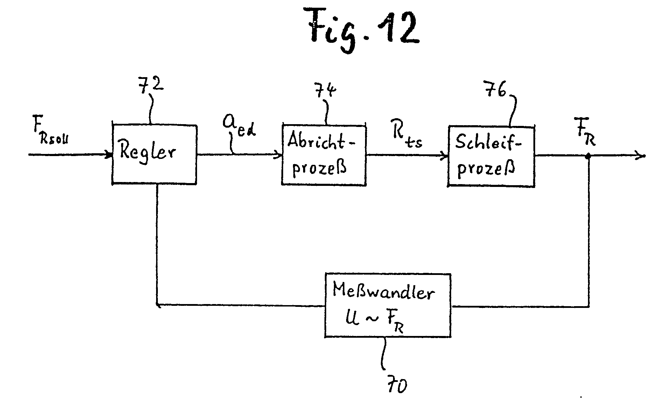

In Fig. 12 ist der dazu erforderliche Regelkreis dargestellt. In einer einfachsten Form wird die Schleifkraft $F_r$ gemessen, sie wird im Meßwandler 70 in ein entsprechendes Istwert-Signal umgewandelt und im Regler 72 wird als Ausgangsgröße die Eingriffsdicke $a_{ed}$ erzeugt, nachdem das Eingangs-Signal des Reglers mit einer vorgegebenen Größe $F_{rsoll}$ der Schnittkraft verglichen wurde. Die Eingriffsdicke $a_{ed}$ ist Eingangsgröße des Abrichtprozesses 74. Die Schärfe der Schleifscheibe ist u.a. wesentlich durch die sogenannte Wirkrauhtiefe $R_{ts}$, die beim Abrichten entsteht, gekennzeichnet. Die Wirkrauhtiefe $R_{ts}$ ist somit Ausgangsgröße des Abrichtprozesses und Eingangsgröße des Schleifprozesses 76. Die Schleifkraft ist die Ausgangsgröße des Schleifprozesses. Der Kreis ist damit geschlossen.

Eine zweite Möglichkeit adaptiver Regelung über die Schleifkraft $F_r$ sei beschrieben.

Fig. 10 zeigt für die Kurve 2 zwei Meßpunkte x und y zu verschiedenen Zeiten $t_1$ und $t_2$.

Wenn die Bedingung besteht, daß die Schleifkraft $F_r$ als Funktion der Zeit nicht ansteigen soll, läßt sich dieses kontrollieren, indem in zwei aufeinander folgenden Zeitpunkten die Schleifkraft $F_{r21}$ bzw. $F_{r22}$ gemessen und abgespeichert wird. Die gespeicherten Meßwerte werden voneinander subtrahiert. Bei zeitlich unveränderter Radialkraft muß die Schleifkraft $F_{r21} = F_{r22}$ sein. Die Differenz ist 0.

Mit Hilfe eines Mikrorechners läßt sich diese Operation leicht durchführen. Bei negativer Differenz ist die Zustellung pro Rollenumdrehung zu klein, entsprechend muß $v_{frd}$ nachgeregelt werden. $v_{frd}$ ist das Produkt aus $a_{ed}$ und der Scheibendrehzahl $n_s(t)$. Die Scheibendrehzahl $n_s(t)$ wurde bereits mit Gleichung 1 erfaßt. Auf diese kann zurückgegriffen werden.

Messung des Kantenverschleißes zur AC-Regelung mit CD-Abrichtmethode

Eine weitere Möglichkeit der AC-Regelung benutzt den Kantenverschleiß der Schleifscheibe als Meßgröße. In Fig. 8 wurde die Funktionsweise einer solchen Meßeinrichtung dargelegt. Erbringen zwei zeitlich aufeinanderfolgende Messungen des Schleifscheibendurchmessers $d_s(t)$ an exponierter Stelle, d.h. an den stark verschleißenden Kanten, einen bestimmten Betrag des Kantenverschleißes, so läßt sich ein solches Signal zum Abrichten benutzen.

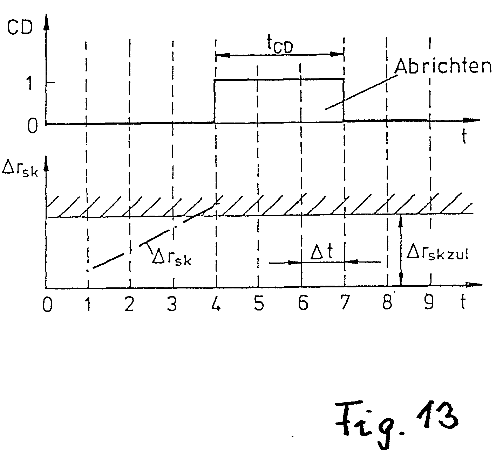

Das Abrichten kann nun intermittierend erfolgen. Damit wird wiederum Schleifscheiben-Abrichtvolumenstrom eingespart. Der Meßvorgang kann so erfolgen, daß nach bestimmten zuvor eingestellten Zeitintervallen der Schleifscheibendurchmesser abgetastet wird. Überschreitet der Kantenverschleiß $\Delta r_{sk}$ einen bestimmten, vorgegebenen zulässigen Betrag, so wird die Abrichtvorrichtung eingeschaltet. Nach einer bestimmten vorwählbaren Zeit läßt sie sich dann wieder abheben. Fig. 13 zeigt den Verlauf von $\Delta r_{sk}$ als Funktion der Zeit und gibt zu erkennen, daß für dieses Beispiel nach vier Zeitinkrementen $\Delta t$ die Abrichtvorrichtung anlief, um eine bestimmte Zeit $t_{cd}$ eingeschaltet zu bleiben. Nach dieser Zeit beginnt wiederum nach vorgegebenen Zeitinkrementen die Messung von $\Delta r_{sk}$. Der Vorgang wiederholt sich. Bei einem solchen intermittierenden Abrichtvorgang – wie es Fig. 1 zeigt – lassen sich z.B. zum Abrichten die entsprechenden Werte für $q_d$ und $a_e$ wählen, wie sie eingangs beschrieben sind und wie sie zur Einhaltung einer vorgegebenen Wirkrauhtiefe der Schleifscheibe erforderlich werden.

Messung der Werkstückrauhtiefe zur AC-Regelung mit CD-Abrichtmethode

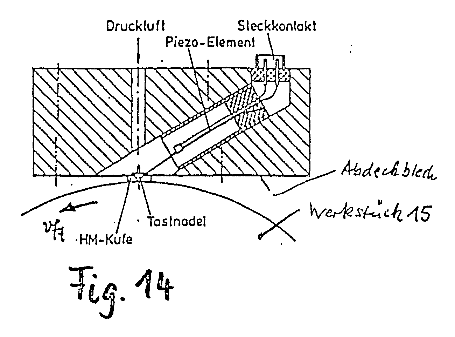

Die Wirkrauhtiefe war ein Maß für die Schärfe der Schleifscheibe. Die Wirkrauhtiefe ist gleichzeitig ein Maß für die zu erwartende Werkstückrauhtiefe. In vielen Versuchen hat sich gezeigt, daß Wirk- und Werkstückrauhtiefe miteinander korrelieren. Das ist verständlich, wenn man davon ausgeht, daß bei einer größeren Wirkrauhtiefe, d.h. bei einer größeren Schleifscheibenumfläche, unter sonst konstanten vergleichbaren Bedingungen auch die Werkstückrauhtiefe ansteigen muß. Ein solches Meßgerät ist mit Fig. 14 dargestellt. Es zeigt den Aufbau: ein Piezoelement mit einer Tastnadel wird durch die Rauhigkeit des Werkstückes, welches sich mit der Vorschubgeschwindigkeit $v_{fr}$ unterhalb der Tastnadel bewegt, zu Schwingungen angeregt. Die Schwingungsamplituden sind ein Maß für die Rauhtiefe. Das hierbei entstehende Rauhtiefensignal ist analog und kontinuierlich und kann weiterverarbeitet werden. Für den Fall des Außenrundeinstechschleifens kann neben Vorschubweg, Schleifkraft und Zeitspannungsvolumen auch die Werkstückrauhigkeit als Faktor der Schleifzeit gemessen werden.

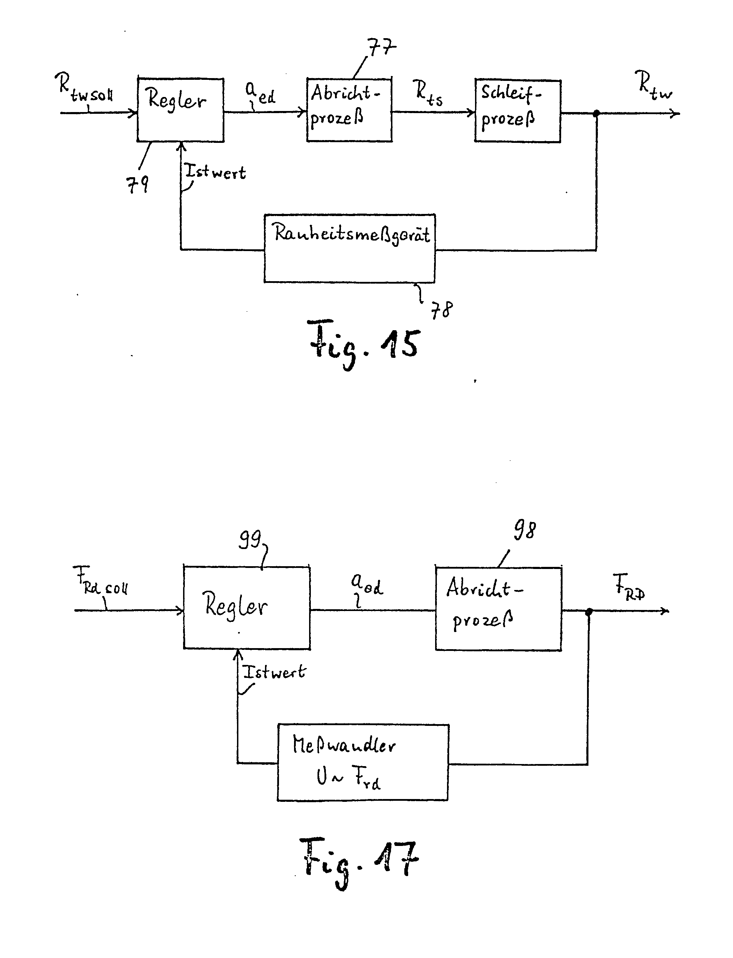

Im Blockschaltbild Fig. 15 ist die Arbeitsweise einer solchen Anpaßregelung in Verbindung mit kontinuierlichem Abrichten dargestellt. Als Ausgangsgröße des Schleifprozesses wird die Werkstückrauhtiefe $R_{tw}$ von einem Rauhigkeitsmeßgerät 78 gemessen und als Istwert gemessen und zum Regler 79 zurückgeführt, für den gleichzeitig eine bestimmte Werkstückrauhtiefe $R_{twsoll}$ als Sollwert zum Vergleichen dient. Sinkt die vorhandene Werkstückrauhtiefe unter einen bestimmten Sollwert $R_{twsoll}$, so läßt das auf eine abgestumpfte glatte Scheibe schließen. Der Regler erhöht die Eingriffsdicke $a_{ed}$ des Abrichtschlittens. Die Eingriffsdicke $a_{ed}$ als Eingangsgröße des Abrichtprozesses 77 wiederum bewirkt nun eine rauhere Scheibentopographie, was einer Erhöhung der Wirkrauhtiefe gleichkommt.

Steigt die Werkstückrauhtiefe hingegen an, so ist das ein Zeichen dafür, daß die Abrichtvorrichtung eine zu hohe Wirkrauhtiefe erzeugt. Nun wird eine Eingriffsdicke $a_{ed}$ eingegeben, die kleiner ist, bis schließlich die Rauhtiefe auf einem gleichmäßigen Maß gehalten wird. Der Vorteil dieser Einrichtung ist auch noch der, daß die Werkstückqualität gleichmäßig ist. Die Qualität eines geschliffenen Werkstückes wird wesentlich von der Werkstückrauhtiefe mit beeinflußt.

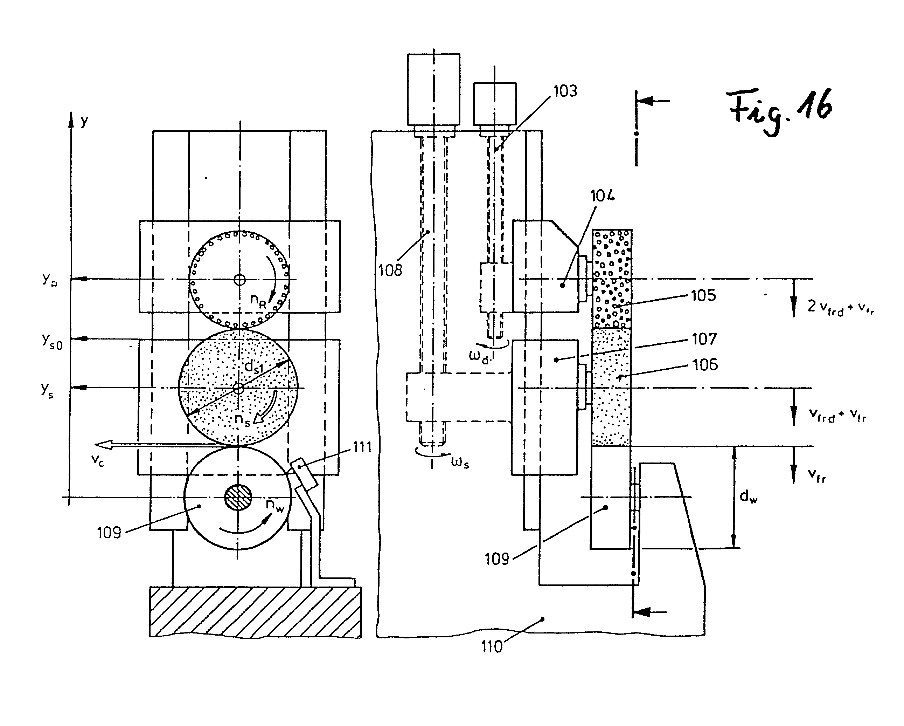

In Fig. 16 ist eine Konstruktion gezeigt, bei der der Schlitten mit der Abrichtrolle vom Schlitten der Schleifscheibe getrennt ist. Es bedeuten 101 den Vorschubmotor für die Abrichteinrichtung zur Erzeugung der Vorschubgeschwindigkeit $v_{frd}$. Über die Transportspindel 103 treibt der Vorschubmotor 101 den Schlitten 104 an, der die Abrichtrolle 105 trägt. Die Schleifscheibe 106 sitzt auf dem Schleifschlitten 107, der durch einen Vorschubmotor 102 über die Transportspindel 108 mit der Winkelgeschwindigkeit $w_s$ zugestellt und in Vorschubrichtung angetrieben wird und damit die Vorschubgeschwindigkeit $v_{fr}$ relativ zum Werkstück 109 erzeugt. Dabei muß der Vorschubschlitten 107 selbst die Absolutgeschwindigkeit $v_{fr} + v_{frd}$ besitzen. Bei der in Fig. 16 dargestellten Einrichtung handelt es sich um das Außenrundeinstechschleifen.

Der in Fig. 14 im Prinzip dargestellte Rauhtiefenmesser, der für kontinuierliche Rauhtiefenmessung bei kontinuierlichen Schleifverfahren angewendet werden kann, um auch über die Rauhtiefe $R_{tw}$ eine adaptive Regelung in Verbindung mit CD-Abrichtprozessen zu erzeugen, ist in Fig. 16 ebenfalls mit angedeutet. Es bedeuten 111 Rauhtiefensensor und 110 das Gestell der Außenrundeinstechschleifmaschine.

## Adaptive Regelung des CD-Abrichtverfahrens über die radiale Abrichtvorschubkraft $F_{rd}$

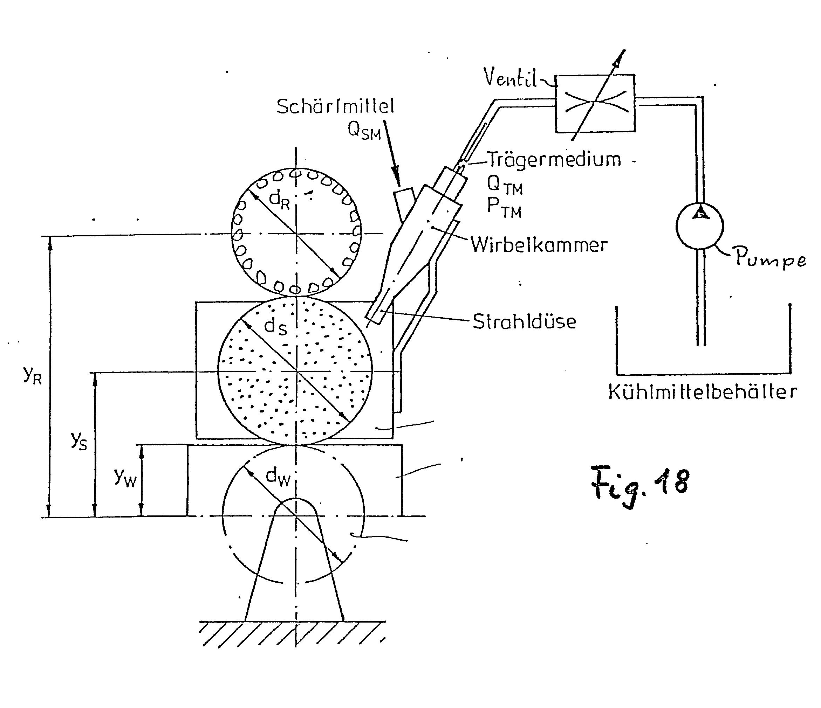

Mißt man die radiale Abrichtvorschubkraft $F_{rd}$, z.B. nach einem Prinzip, wie dies bereits in Fig. 10 beschrieben worden ist, so läßt sich hiermit ebenfalls eine adaptive Regelung durchführen. Das Prinzip des Regelkreises ist mit Fig. 17 dargestellt. Die Eingangsgröße im Abrichtprozeß 98 ist wieder die Eingriffsdicke $a_{ed}$. Abhängig von $a_{ed}$ ergibt sich die Abrichtradialkraft $F_{rd}$. Sie läßt sich z.B. über die Radiallager in der Lagerung der Abrichtwelle messen. Sie wird zurückgeführt und als Istwert dem Regler 99 eingespeist. Dieser vergleicht den Istwert der Radialkraft mit dem Sollwert der Radialkraft. Danach kann jetzt eine radiale Eingriffsdicke $a_{ed}$ für die Abrichtrolle relativ zur Schleifscheibe ausgegeben werden. Bei einer solchen Regelung kann somit die Geschwindigkeit des Einstechens zwischen Rolle und Scheibe unabhängig von den übrigen meist zusammenhängenden Einflußgrößen vorgenommen werden. Es läßt sich dabei z.B. eine Abrichtradialkraft $F_{rd}$ vorgeben, die relativ klein ist, woraus wiederum eine sehr geringe Eingriffsdicke $a_{ed}$ resultiert, was wiederum zu einem geringen Scheibenverlustvolumenstrom führt. Die Wirtschaftlichkeit läßt sich damit also erhöhen, ohne daß der Schleifprozeß ungünstig abläuft. Außerdem läßt sich verhindern, daß die Radialkraft $F_{rd}$ übermäßig ansteigt, was zu unzulässiger Verformung und Schwingungen führen kann.

## Kombination der CD-Abrichtmethode mit der Methode des Strahlläppverfahrens

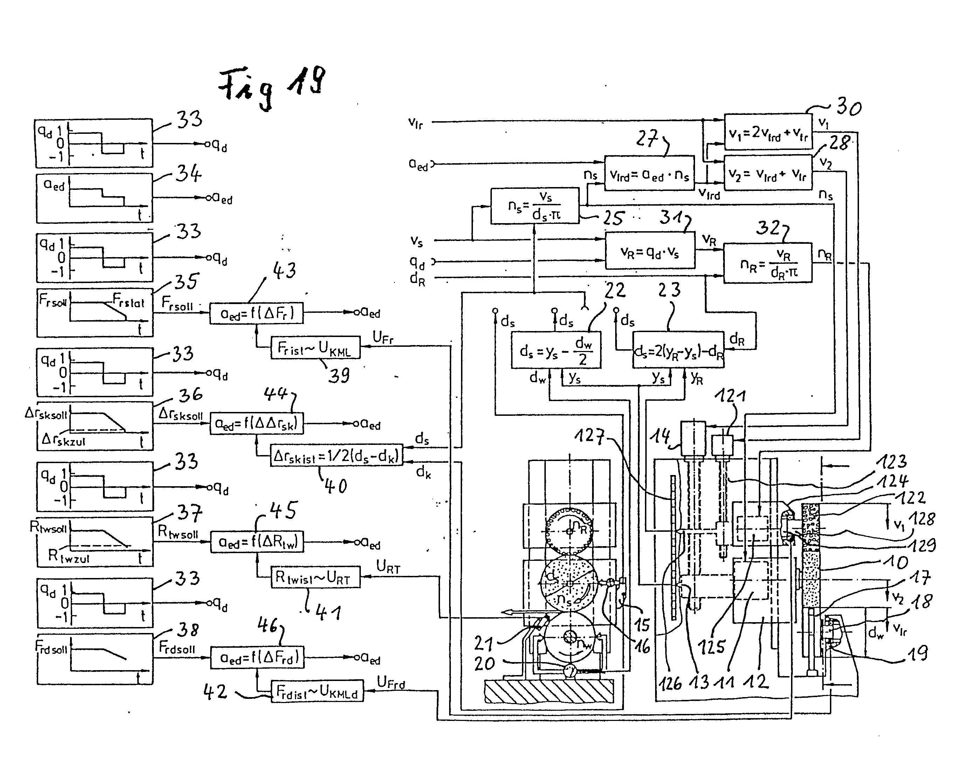

Fig. 18 zeigt Fig. 2 abgewandelt und vereinfacht mit einer solchen Strahlläppeinrichtung, die aus Pumpe, Ventil und Strahldüse besteht. Mit einem Druck von etwa 100 bar und mehr wird die Flüssigkeit gegen die Schleifscheibe gespritzt. Damit läßt sich quasi ein Schärfvorgang durchführen, der aber nicht zu dem gleichen Schleifscheibenvolumenstrom führt wie beim Abrichten selbst. Kombiniert man ein solches Strahlläppen mit den zuvor beschriebenen AC-Einrichtungen, z.B. mit einer Messung der Abrichtradialkraft $F_{rd}$ oder mit der Schnittkraft $F_r$, so läßt sich ein Einschaltsignal für die Abrichtrolle geben, sobald ein bestimmter Grenzwert überschritten wird. Diesem könnte folgende Strategie zugrundeliegen:

Es wird zunächst geschliffen und nur das Strahlläppverfahren betrieben. Die Abrichtvorrichtung steht still. Dabei wird die Schleifnormalkraft bzw. Radialkraft gemessen. Steigt sie über einen bestimmten vorgegebenen Wert an, dann wird die Abrichtvorrichtung in Bewegung gesetzt. Auf diese Weise läßt sich eine intermittierende Methode zwischen Abrichten mit Hochdruckausspülen bzw. Läppstrahlen je nach Bedarf und angepaßt an die jeweils auftretenden Störgrößen beim Schleifen wie Inhomogenität des Werkstückstoffes bewerkstelligen.

Insgesamt kann man statt einer oder mehrerer Diamantrollen pro Schleifscheibe eine oder mehrere Abrichtblöcke pro Schleifscheibe verwenden. Auch Kombinationen zwischen Abrichtrolle und Abrichtblock wären denkbar. So ließe sich z.B. beim Schruppen mit einem Abrichtblock die Schleifscheibe abrichten und beim Schlichten mit einer Diamantrolle oder umgekehrt. Dieses hängt ab von der Konzentration der Diamanten auf den Abrichtwerkzeugen und von der Größe der einzelnen Diamanten.

In Fig. 19 sind die Vorrichtung und die Steuerschaltung zum gleichzeitigen Schleifen und Abrichten exemplarisch für eine Außenrundeinstechschleifmaschine dargestellt. Bei der hier gewählten Konstruktion ist der Schlitten mit der Abrichtrolle vom Schlitten mit der Schleifscheibe getrennt.

Es bedeutet 121 der Vorschubmotor für die Abrichteinrichtung zur Erzeugung der Vorschubgeschwindigkeit $v_{frd}$. Über die Transportspindel 123 treibt der Vorschubmotor 121 den Schlitten 124 an. Er trägt den Abrichtmotor 125, die vom Abrichtmotor 125 angetriebene Abrichtrolle 122 sowie den Wegmesser 126, der die Höhenlage der Abrichtrollenachse über der Werkstückachse $y_R$ mit Hilfe des gestellfesten Maßstabs 127 erfaßt. Die Abrichtspindel 128 ist in einem Kraftmeßlager 129 gelagert, das ein der Abrichtradialkraft $F_{rd}$ entsprechendes Signal $U_{Frd}$ liefert.

Die Schleifscheibe 10 wird vom Schleifmotor 11 angetrieben. Die Höhenlage der Schleifscheibenachse über der Werkstückachse $y_s$ erfaßt der Wegmesser 13. Wegmesser 13, Schleifscheibe 10 und Schleifmotor 11 sitzen auf dem Schlitten 12, der durch einen Vorschubmotor 14 angetrieben wird und damit die Vorschubgeschwindigkeit $v_{fr}$ relativ zum Werkstück 17 erzeugt.

Am Schlitten 12 ist weiterhin die beschriebene Meßeinrichtung 15 zur direkten Bestimmung des Schleifscheibendurchmessers $d_s$ befestigt, deren Taster 16 die Schleifscheibenmantelfläche auf einem Flugkreis radial antastet.

Das Werkstück 17 wird über die Spindel 18 angetrieben, die in Kraftmeßlager 19 gelagert ist. Das Kraftmeßlager 19 liefert ein Signal $U_{Fr}$ für die Radialkraft beim Schleifen $F_r$. Ein gestellfestes Durchmessermeßgerät 20 ermittelt direkt den Werkstückdurchmesser $d_w$ oder auf dem Flugkreis eines bestimmten Profilpunktes den Durchmesser $d_R$. Ein Rauheitsmesser 21 liefert ein Signal $U_{Rt}$ für die Werkstückrauhtiefe $R_t$.

Falls der Schleifscheibendurchmesser $d_s$ nicht direkt gemessen wird, ermitteln ihn die Verknüpfer 22 oder 23 wahlweise aus den Meßwerten $d_w$ und $y_s$ bzw. $y_s$ und $y_R$ sowie dem Rollendurchmesser $d_R$ vom Konstantengeber 24. Der Verknüpfer 25 ermittelt aus $d_s$ sowie der Schleifscheibenumfangsgeschwindigkeit $v_s$ vom Konstantengeber 26 die Schleifscheibendrehzahl $n_s$, die das Stellsignal für den Schleifmotor 14 bildet. Der Verknüpfer 27 berechnet aus $n_s$ und der Eingriffsdicke beim Abrichten $a_{ed}$ die radiale Vorschubgeschwindigkeit beim Abrichten $v_{frd}$, wobei $a_{ed}$ nach mehreren Gesichtspunkten von jeweils verschiedenen Gebern festgelegt werden kann. Der Verknüpfer 28 liefert aus $v_{frd}$ und der radialen Vorschubgeschwindigkeit beim Schleifen $v_{fr}$ vom Konstantengeber 29 das Stellsignal $v_2$ für die Vorschubgeschwindigkeit des Schlittens 12, der Verknüpfer 30 entsprechend das Stellsignal $v_1$ für die Vorschubgeschwindigkeit des Schlittens 1. Der Verknüpfer 31 berechnet aus $v_s$ vom Konstantengeber 26 sowie dem nach verschiedenen Gesichtspunkten vorgebbaren Geschwindigkeitsverhältnis beim Abrichten $q_d$ die Abrichtrollenumfangsgeschwindigkeit $v_R$. Der Verknüpfer 32 berechnet aus $v_R$ und $d_R$ vom Konstantengeber 24 das Stellsignal $n_R$ für die Drehzahl des Abrichtmotors 5.

Die Vorgabe von $a_{ed}$ und $q_d$ kann nach verschiedenen Methoden erfolgen. Wie unter a) dargestellt und bereits in Fig. 7 beschrieben, liefern die Konstantengeber 33 und 34 Werte für $q_d$ und $a_{ed}$ nach einem festen Programm. Wie unter b) bis e) dargestellt, wird $q_d$ vom Konstantengeber 33 nach einem festen Programm vorgegeben, $a_{ed}$ jedoch wird adaptiv geregelt, so daß Sollwerte für Prozeß- oder Qualitätskenngrößen eingehalten werden. Dementsprechend liefern die Konstantengeber 35, 36, 37 und 38 Sollwerte für die Radialkraft beim Schleifen $F_{rsoll}$, den Kantenverschleiß der Schleifscheibe $\Delta r_{sk\,soll}$, die Werkstückrauhtiefe $R_{tw\,soll}$ bzw. die Radialkraft beim Abrichten $F_{rd\,soll}$. Aus den gemessenen Signalen werden die Istwerte $F_{r\,ist}$, $\Delta r_{sk\,ist}$, $R_{tw\,ist}$ bzw. $F_{rd\,ist}$ durch die Meßwandler 39, 41, 42 bzw. Verknüpfer 40 bestimmmt. Die Vergleicher 43, 44, 45, 46 ermitteln aus der jeweiligen Soll-Istwert-Differenz einen Vorgabewert für $a_{ed}$.

Die Erfindung läßt sich in gleicher Weise für das Rundschleifen wie für das Planschleifen von Werkstücken einsetzen.

## Patentansprüche

1. Abricht-Schleifverfahren zum Rund- oder Planschleifen eines Werkstückes (10) mittels einer von einem programmierbaren Rechner gesteuerten Schleifmaschine, welche eine auf einem Schleifscheibenträger (25) angeordnete Schleifscheibe (20) und eine auf einem Abrichtrollenträger (31) angeordnete Abrichtrolle aufweist, wobei die Schleifscheibe während des Schleifens durch die Abrichtrolle kontinuierlich abgerichtet wird und der Rechner aus Positions-Rückmeldungen des Schleifscheibenträgers und programmierten Soll-Werten die Zustellung der Schleifscheibe ermittelt, dadurch gekennzeichnet, daß die Zustellung der Abrichtrolle (30) zur Schleifscheibe (20) sowie die Geschwindigkeiten der Abrichtrolle und der Schleifscheibe dem Rechner kontinuierlich zugeführt und zur Einhaltung einer vorgegebenen Wirkrauhtiefe ($R_{ts}$) der Schleifscheibe der Abrichtrollenträger (31) dem Schleifscheibenträger (25) kontinuierlich gemäß den Funktionen

$$v_{lrd}(t) = a_{ed}(t) \cdot n_s(t) = \frac{v_s}{\pi} \cdot \frac{a_{ed}(t)}{d_s(t)} =$$

$$\frac{v_s}{\pi} \cdot \frac{a_{ed}(t)}{2(y_s(t) - y_w(t))}$$

nachgeführt wird, worin bedeuten:

$v_{lrd}(t)$    Vorschubgeschwindigkeit des Abrichtrollenschlittens (31) relativ zum Schleifscheibenschlitten

$a_{ed}(t)$    Abrichtzustellung pro Umdrehung

$n_s(t)$    Schleifscheibendrehzahl

$d_s(t)$    Schleifscheibendurchmesser

$t$    laufende Zeit

$v_s$    Schleifscheibenumfangsgeschwindigkeit, für das beschriebene Beispiel einer geraden Schleifscheibe gleicht sie der Schleifscheibengeschwindigkeit $v_c$. Es ist somit $v_c = v_s$.

$y_s(t)$    vertikale Koordinate des Scheibenmittelpunktes

$y_w(t)$    Werkstückabmessung in y-Richtung.

2. Verfahren nach Anspruch 1, dadurch gekennzeichnet, daß im Rahmen eines vorgegebenen, programmierten Schleifprogramms das Geschwindigkeitsverhältnis $q_d$ zwischen Abrichtrolle und Schleifscheibe gemäß der Funktion

$$q_d = \frac{v_R}{v_{sd}} = \frac{v_R}{n_s(t) \cdot \pi \cdot 2 \cdot (y_s(t) - y_w(t))} \quad \text{(s.Gl. 9)}$$

zur Einhaltung einer vorgegebenen Wirkrauhtiefe $R_{ts}$ angepaßt wird.

3. Verfahren nach Anspruch 1 oder 2, dadurch gekennzeichnet, daß die Durchmesser von Abrichtrolle und Schleifscheibe relativ zu einem maschinenfesten Koordinatensystem kontinuierlich erfaßt und dem Rechner zugeführt werden.

4. Verfahren nach einem der vorstehenden Ansprüche, dadurch gekennzeichnet, daß die Schleifkraft am Werkstück und/oder der Schleifscheibe erfaßt und aus einem Vergleich mit einem Sollwert die Zustellung der Abrichtrolle erzeugt wird.

5. Verfahren nach Anspruch 4, dadurch gekennzeichnet, daß ein die gemessene Schleifkraft repräsentierendes Signal einem Regler (72) zugeführt wird, der ein die Zustellung repräsentierendes Ausgangssignal erzeugt.

6. Verfahren nach einem der vorstehenden Ansprüche, dadurch gekennzeichnet, daß in zwei aufeinanderfolgenden Zeitpunkten die Schleifkraft ($F_r$) gemessen und mit der Differenz der gemessenen Schleifkräfte ($F_{r21}$, $F_{r22}$) die Zustellung der Abrichtrolle (30) gesteuert wird.

7. Verfahren nach einem der vorstehenden Ansprüche, dadurch gekennzeichnet, daß zum intermittierenden Abrichten der Kantenverschleiß der Schleifscheibe (20) gemessen und bei Überschreiten eines vorgegebenen Wertes während einer Zeitspanne abgerichtet wird.

8. Verfahren nach einem der vorstehenden Ansprüche, dadurch gekennzeichnet, daß die Abricht-Radialkraft ($F_{rd}$) in der Lagerung der Abrichtwelle gemessen und in einem Regler (99) mit einem Sollwert verglichen wird, der ein die Zustellung der Abrichtrolle steuerndes Ausgangssignal abgibt.

9. Durch einen programmierbaren Rechner gesteuerte Schleifmaschine, welche eine auf einem Schleifscheibenträger (25) angeordnete Schleifscheibe (20) und eine auf einem Abrichtrollenträger (31) angeordnete Abrichtrolle (30) aufweist, wobei Einrichtungen zum Erfassen der Zustellung der Abrichtrolle zur Schleifscheibe sowie der Zustellung der Schleifscheibe zum Werkstück und zur Erfassung der Geschwindigkeiten der Abrichtrolle sowie der Schleifscheibe vorgesehen und mit dem Rechner gekoppelt sind, der unter Verwendung von gespeicherten, den Schleifprozeß bestimmenden, zeitlich veränderlichen Kenngrößen die Zustellung steuert, dadurch gekennzeichnet, daß die Einrichtungen ein Durchmesser-Meßgerät (20) zur Ermittlung des Werkstückdurchmessers ($d_w$) sowie einen Wegmesser (126) zur Ermittlung der Höhenlage ($y_s$) der Schleifscheibenachse über der Werkstückachse und Verknüpfer (22, 23) enthalten, die aus dem Werkstückdurchmesser ($d_w$) und der Höhenlage ($y_s$) sowie aus dem von einem Konstantengeber (24) gelieferten Abrichtrollendurchmesser ($d_R$) den Schleifscheibendurchmesser ($d_s$) ermitteln.

10. Schleifmaschine nach Anspruch 9, dadurch gekennzeichnet, daß ein weiterer Verknüpfer (25) aus dem Schleifscheibendurchmesser ($d_s$) sowie aus der von einem weiteren Konstantengeber gelieferten Schleifscheibenumfangsgeschwindigkeit ($v_s$) die Schleifscheibendrehzahl ($n_s$) als Stellsignal für den Schleifscheibenmotor (111) erzeugt.

11. Schleifmaschine nach einem der Ansprüche 9 oder 10, dadurch gekennzeichnet, daß ein weiterer Verknüpfer (27) aus der Schleifscheibendrehzahl ($n_s$) und der Zustellung ($a_{ed}$) beim Abrichten die radiale Vorschubgeschwindigkeit beim Abrichten ($v_{frd}$) ermittelt.

12. Schleifmaschine nach einem der Ansprüche 9 bis 11, dadurch gekennzeichnet, daß ein weiterer Verknüpfer (28) aus der radialen Vorschubgeschwindigkeit ($v_{frd}$) beim Abrichten und der radialen Vorschubgeschwindigkeit ($v_{fr}$) beim Schleifen aus dem Konstantengeber (29) das Stellsignal ($v_2$) für die Vorschubgeschwindigkeit des Abrichtrollen-Schlittens (124) liefert.

13. Schleifmaschine nach einem der Ansprüche 9 bis 12, dadurch gekennzeichnet, daß ein weiterer Verknüpfer (30) aus der radialen Vorschubgeschwindigkeit ($v_{frd}$) beim Abrichten und der radialen Vorschubgeschwindigkeit ($v_{fr}$) beim Schleifen das Stellsignal ($v_1$) für die Vorschubgeschwindigkeit des Schleifscheiben-Schlittens liefert.

14. Schleifmaschine nach einem der Ansprüche 9 bis 13, dadurch gekennzeichnet, daß ein weiterer Verknüpfer (31) aus der Schleifscheibenumfangsgeschwindigkeit ($v_s$) und dem anzuwendenden Geschwindigkeitsverhältnis ($q_d$) beim Abrichten die Abrichtrollenumfangsgeschwindigkeit ($v_R$) ermittelt.

15. Schleifmaschine nach einem der Ansprüche 9 bis 14, dadurch gekennzeichnet, daß ein weiterer Verknüpfer (32) aus der Höhenlage ($y_R$) der Abrichtrollenachse über der Werkstückachse und dem Abrichtrollendurchmesser ($d_R$) aus dem Konstantengeber (24) das Stellsignal ($n_R$) für die Drehzahl des Abrichtmotors (121) ermittelt.

16. Schleifmaschine nach einem der Ansprüche 9 bis 15, dadurch gekennzeichnet, daß ein Konstantengeber (35) für die Radialkraft beim Schleifen ($F_{r\,soll}$), einen Konstantengeber (36) für den Kantenverschleiß der Schleifscheibe ($\Delta r_{sk\,soll}$), einen Konstantengeber (37) für die Werkstückrauhtiefe ($R_{tw\,soll}$) und einen Konstantengeber (38) für die Radialkraft beim Abrichten ($F_{rd\,soll}$) vorgesehen sind, deren Ausgangsleitungen mit Meßwandlern (39, 41, 42) bzw. Verknüpfern (40) gekoppelt sind, welche aus der Differenz zwischen den aus den Konstantengebern aufgenommenen Signalen und den zugehörigen, gemessenen Signalen jeweils eine Soll-Ist-Differenz bilden und Vergleichern (43, 44, 45, 46) zuführen, die aus den aufgenommenen Differenzsignalen die Zustellung ($a_{ed}$) beim Abrichten ermitteln.

## Claims

1. A dressing-grinding process for round or facing grinding of a workpiece (10) by means of a grinding machine which is controlled by a programmable computer and which has a grinding wheel (20) arranged on a grinding wheel carrier (25) and a dressing roller arranged on a dressing roller carrier (31), wherein the grinding wheel is continuously dressed during the grinding operation by the dressing roller and the computer ascertains the feed for the grinding wheel from positional feedbacks from the grinding wheel carrier and programmed reference values, characterised in that the feed of the dressing roller (30) relative to the grinding wheel (20) and the speeds of the dressing roller and the grinding wheel are continuously fed to the computer and to maintain a predetermined effective rough depth ($R_{ts}$) of the grinding wheel the dressing roller carrier (31) is continuously adjusted in relation to the grinding wheel carrier (25) in accordance with the following functions:

$$v_{frd}(t) = a_{ed}(t) \cdot n_s(t) = \frac{v_s}{\pi} \cdot \frac{a_{ed}(t)}{d_s(t)} =$$

$$\frac{v_s}{\pi} \cdot \frac{a_{ed}(t)}{2(y_s(t) - y_w(t))}$$

wherein:

$v_{frd}(t)$    denotes the feed speed of the dressing roller carriage (31) relative to the grinding wheel carriage,

$a_{ed}(t)$    denotes the dressing feed per revolution,

$n_s(t)$    denotes the grinding wheel speed of rotation,

$d_s(t)$    denotes the grinding wheel diameter,

$t$    denotes the passing time,

$v_s$    denotes the grinding wheel peripheral speed, for the described example of a straight grinding wheel it is equal to the grinding wheel speed $v_c$, so $v_c = v_s$,

$y_s(t)$ denotes the vertical coordinate of the wheel centre, and

$y_w(t)$ denotes the workpiece dimension in the y-direction.

2. A process according to claim 1, characterised in that within a predetermined programmed grinding program the speed relationship $q_d$ between the dressing roller and the grinding wheel is adapted in accordance with the following function:

$$q_d = \frac{v_R}{v_{sd}} = \frac{v_R}{n_s(t) \cdot \pi \cdot 2 \cdot (y_s(t) - y_w(t))}$$

(see equation 9)

to maintain a predetermined effective rough depth $R_{ts}$.

3. A process according to claim 1 or claim 2, characterised in that the diameters of the dressing roller and the grinding wheel are continuously detected relative to a coordinate system which is fixed with respect to the machine, and fed to the computer.

4. A process according to one of the preceding claims, characterised in that the grinding force at the workpiece and/or the grinding wheel is detected and the feed of the dressing roller is produced from a comparison with a reference value.

5. A process according to claim 4, characterised in that a signal representing the measured grinding force is fed to a regulator (72) which produces an output signal representing the feed.

6. A process according to one of the preceding claims, characterised in that the grinding force ($F_r$) is measured at two successive points in time and the feed of the dressing roller (30) is controlled with the difference in respect of the measured grinding forces ($F_{r21}$, $F_{r22}$).

7. A process according to one of the preceding claims, characterised in that for intermittent dressing the edge wear of the grinding wheel (20) is measured and, when it exceeds a predetermined value, dressing is effected for a period of time.

8. A process according to one of the preceding claims, characterised in that the radial dressing force ($F_{rd}$) is measured in the bearing means of the dressing shaft and compared to a reference value in a regulator (99), which outputs an output signal for controlling the dressing roller feed.

9. A grinding machine which is controlled by a programmable computer and which has a grinding wheel (20) arranged on a grinding wheel carrier (25) and a dressing roller (30) arranged on a dressing roller carrier (31), wherein means are provided for determining the feed of the dressing roller relative to the grinding wheel and the feed of the grinding wheel relative to the workpiece and for determining the speeds of the dressing roller and the grinding wheel, and are coupled to the computer which controls the feed, using stored parameters which determine the grinding process and which are variable in respect of time, characterised in that the means include a diameter measuring device (20) for ascertaining the workpiece diameter ($d_w$) and a travel measuring means (126) for determining the position ($y_s$) in respect of height of the axis of the grinding wheel above the workpiece axis and linking means (22, 23) which determine the grinding wheel diameter ($d_s$) from the workpiece diameter ($d_w$) and the position ($y_s$) in respect of height, and from the dressing roller diameter ($d_R$) which is supplied by a constant generator (24).

10. A grinding machine according to claim 9, characterised in that a further linking means (25) produces the grinding wheel speed of rotation ($n_s$) as a control signal for the grinding wheel motor (111), from the grinding wheel diameter ($d_s$) and from the grinding wheel peripheral speed ($v_s$) which is supplied by a further constant generator.

11. A grinding machine according to one of claims 9 and 10, characterised in that a further linking means (27) determines the radial dressing feed speed ($v_{frd}$) from the grinding wheel speed of rotation ($n_s$) and the feed ($a_{ed}$) in the dressing operation.

12. A grinding machine according to one of claims 9 to 11, characterised in that a further linking means (28) provides the control signal ($v_s$) for the feed speed of the dressing roller carriage (124) from the radial feed speed ($v_{frd}$) in the dressing operation and the radial feed speed ($v_{fr}$) in the grinding operation, from the constant generator (29).

13. A grinding machine according to one of claims 9 to 12, characterised in that a further linking means (30) provides the control signal ($v_1$) for the feed speed of the grinding wheel carriage from the radial feed speed ($v_{frd}$) in the dressing operation and the radial feed speed ($v_{fr}$) in the grinding operation.

14. A grinding machine according to one of claims 9 to 13, characterised in that a further linking means (31) determines the dressing roller peripheral speed ($v_R$) from the grinding wheel peripheral speed ($v_s$) and the speed relationship ($q_d$) to be applied in the dressing operation.

15. A grinding machine according to one of claims 9 to 14, characterised in that a further linking means (32) determines the control signal ($n_R$) for the speed of rotation of the dressing motor (121) from the position ($y_R$) in respect of height of the axis of the dressing roller above the axis of the workpiece and the dressing roller diameter ($d_R$) from the constant generator (24).

16. A grinding machine according to one of claims 9 to 15, characterised in that there are provided a constant generator (35) for the radial force in the grinding operation ($F_{r\,soll}$), a constant generator (36) for the grinding wheel edge wear ($\Delta r_{sk\,soll}$), a constant generator (37) for the workpiece rough depth ($R_{tw\,soll}$) and a constant generator (38) for the radial force in the dressing operation ($F_{rd\,soll}$), the output lines thereof being coupled to measuring transducers (39, 41, 42) and linking means (40) respectively, which each form a respective reference value/actual value difference from the difference between the signals received from the constant generators and the associated measured signals, and feed them to comparators (43, 44, 45, 46) which from the received difference signals determine the feed ($a_{ed}$) in the dressing operation.

## Revendications

1. Procédé de dressage et rectification pour rectifier de manière cylindrique ou plane une pièce (10) au moyen d'une rectifieuse qui est commandée par un ordinateur programmable et qui possède une meule (20) montée sur un porte-meule (25) et un galet de dressage monté sur un porte-galet de dressage (31), la meule étant dressée en continu par le galet de dressage lors de la rectification et l'ordinateur déterminant l'approche de la meule en fonction de signaux de rétroaction de position du porte-meule et de valeurs théoriques programmées, caractérisé en ce que l'approche du galet de dressage (30) par rapport à la meule (20) ainsi que les vitesses du galet de dressage et de la meule sont transmises en continu à l'ordinateur et, pour respecter une profondeur d'aspérité de travail prédéfinie ($R_{ts}$) de la meule, le porte-galet de dressage (31) suit continuellement le porte-meule (25) selon les fonctions

$$v_{frd}(t) = a_{ed}(t) \cdot n_s(t) = \frac{v_s}{\pi} \cdot \frac{a_{ed}(t)}{d_s(t)} = \frac{v_s}{\pi} \cdot \frac{a_{ed}(t)}{2(y_s(t) - y_w(t))}$$

où:

| | |
|---|---|
| $v_{frd}(t)$ | est la vitesse d'avance du chariot de galet de dressage (31) par rapport au chariot de meule |
| $a_{ed}(t)$ | est l'approche de dressage par tour |
| $n_s(t)$ | est la vitesse de rotation de meule |
| $d_s(t)$ | est le diamètre de meule |
| $t$ | est la variable temps |
| $v_s$ | est la vitesse circonférentielle de meule; dans l'exemple décrit d'une meule droite, elle est égale à la vitesse de meule $v_c$. On a donc $v_c = v_s$. |
| $y_s(t)$ | est la coordonnée verticale du centre de la meule |
| $y_w(t)$ | est la dimension de la pièce dans le sens y. |

2. Procédé conforme à la revendication 1, caractérisé en ce que, dans le cadre d'un programme de rectification programmé et prédéfini, le rapport de vitesses $q_d$ entre le galet de dressage et la meule est adapté conformément à la fonction

$$q_d = \frac{v_R}{v_{sd}} = \frac{v_R}{n_s(t) \cdot \pi \cdot 2 \cdot (y_s(t) - y_w(t))}$$

(voir équation 9)

pour respecter une profondeur d'aspérité de travail prédéfinie $R_{ts}$.

3. Procédé conforme à la revendication 1 ou 2, caractérisé en ce que les diamètres du galet de dressage et de la meule sont déterminés en continu par rapport à un système de coordonnées solidaire de la machine et transmis à l'ordinateur.

4. Procédé conforme à l'une des revendications précédentes, caractérisé en ce que la force de rectification est déterminée au niveau de la pièce et/ou de la meule et l'approche du galet de dressage est produite à partir d'une comparaison avec une valeur théorique.

5. Procédé conforme à la revendication 4, caractérisé en ce qu'un signal représentant la force de rectification mesurée est transmis à un régulateur (72) qui produit un signal de sortie représentant l'approche.

6. Procédé conforme à l'une des revendications précédentes, caractérisé en ce qu'à deux instants successifs, la force de rectification ($F_r$) est mesurée et l'approche du galet de dressage (30) est commandée avec la différence des forces de rectification mesurées ($F_{r21}$, $F_{r22}$).

7. Procédé conforme à l'une des revendications précédentes, caractérisé en ce que, pour le dressage intermittent, l'usure d'arête de la meule (20) est mesurée et un dressage est effectué pendant un laps de temps en cas de dépassement d'une valeur prédéfinie.

8. Procédé conforme à l'une des revendications précédentes, caractérisé en ce que la force radiale de dressage ($F_{rd}$) est mesurée dans le logement de l'arbre de dressage et est comparée avec une valeur théorique dans un régulateur (99) qui fournit un signal de sortie commandant l'approche du galet de dressage.

9. Rectifieuse commandée par un ordinateur programmable, qui comprend une meule (20) montée sur un porte-meule (25) et un galet de dressage (30) monté sur un porte-galet de dressage (31), des systèmes pour déterminer l'approche du galet de dressage par rapport à la meule ainsi que l'approche du galet de dressage par rapport à la pièce et pour déterminer les vitesses du galet de dressage ainsi que de la meule étant prévus et couplés à l'ordinateur qui commande l'approche en utilisant des grandeurs caractéristiques mémorisées, déterminant le processus de rectification et variables dans le temps, caractérisée en ce que les systèmes contiennent un appareil de mesure de diamètre (20) pour déterminer le diamètre de pièce ($d_w$) ainsi qu'un dispositif de mesure de course (126) pour déterminer la position en hauteur ($y_s$) de l'axe de la meule au-dessus de l'axe de la pièce et des éléments logiques (22, 23) qui déterminent le diamètre de meule ($d_s$) à partir du diamètre de pièce ($d_w$) et de la position en hauteur ($y_s$) ainsi que du diamètre de galet de dressage ($d_R$) fourni par un élément indicateur de constantes (24).

10. Rectifieuse conforme à la revendication 9, caractérisée en ce qu'un autre élément logique (25) produit, à partir du diamètre de meule ($d_s$) ainsi que de la vitesse circonférentielle de meule ($v_s$) fournie par un autre élément indicateur de constantes, la vitesse de rotation de meule ($n_s$) sous la forme d'un signal de régulation pour le moteur de meule (111).

11. Rectifieuse conforme à l'une des revendications 9 ou 10, caractérisée en ce qu'un autre élément logique (27) détermine la vitesse d'avance radiale lors du dressage ($v_{frd}$) à partir de la vitesse de rotation de meule ($n_s$) et de l'approche ($a_{ed}$).

12. Rectifieuse conforme à l'une des revendications 9 à 11, caractérisée en ce qu'un autre élément logique (28) fournit, à partir de la vitesse d'avance radiale ($v_{frd}$) lors du dressage et à partir de la vitesse d'avance radiale ($v_{fr}$) lors de la rectification provenant de l'élément indicateur de constantes (29), le signal de régulation ($v_2$) pour la vitesse d'avance du chariot de galet de dressage (124).

13. Rectifieuse conforme à l'une des revendications 9 à 12, caractérisée en ce qu'un autre élément logique (30) fournit, à partir de la vitesse d'avance radiale ($v_{frd}$) lors du dressage et à partir de la vitesse d'avance radiale ($v_{fr}$) lors de la rectification, le signal de régulation ($v_1$) pour la vitesse d'avance du chariot de meule.

14. Rectifieuse conforme à l'une des revendications 9 à 13, caractérisée en ce qu'un autre élément logique (31) détermine la vitesse circonférentielle de galet de dressage ($v_R$) à partir de la vitesse circonférentielle de meule ($v_s$) et du rapport de vitesses ($q_d$) à appliquer.

15. Rectifieuse conforme à l'une des revendications 9 à 14, caractérisée en ce qu'un autre élément logique (32) détermine, à partir de la position en hauteur ($y_R$) de l'axe du galet de dressage au-dessus de l'axe de la pièce et à partir du diamètre de galet de dressage ($d_R$) provenant de l'élément indicateur de constantes (24), le signal de régulation ($n_R$) pour la vitesse de rotation du moteur de dressage (121).

16. Rectifieuse conforme à l'une des revendications 9 à 15, caractérisée en ce qu'il est prévu un élément indicateur de constantes (35) pour la force radiale lors de la rectification ($F_{rsoll}$), un élément indicateur de constantes (36) pour l'usure d'arête de la meule ($\Delta r_{sksoll}$), un élément indicateur de constantes (37) pour la profondeur d'aspérité de pièce ($R_{twsoll}$) et un élément indicateur de constantes (38) pour la force radiale lors du dressage ($F_{rdsoll}$), dont les liaisons de sortie sont couplées à des transformateurs de mesure (39, 41, 42), respectivement à des éléments logiques (40) qui, à partir de la différence entre les signaux reçus des éléments indicateurs de constantes et les signaux mesurés correspondants, forment une différence théorique-réel et la transmettent à des comparateurs (43, 44, 45, 46) qui, à partir des signaux de différence reçus, déterminent l'approche ($a_{ed}$) lors du dressage.

EP 0 096 411 B1

$y_{abs}$

30

$n_R$

$d_R$

30

$v_1(t) = 2v_{frd}(t)$

$l_1(t_c) = 2l_{frd}(t_c)$

$v_R$    $v_s = v_{sd}$

$d_R$

$v_{frd}(t)$

$d_{s0}$   $n_{s0}$   20

20

$l_2(t_c)$ $= l_{frd}(t_c)$

$y_{R0}$

$v_2 = v_{frd}(t)$

$d_s(t)$

$n_s(t_c)$

$y_R(t_c)$

$y_{s0}$

$A$   $v_{fr} = 0$

$A$

$y_s(t_c)$

$y_{w0}$

$d_{w0}$   $n_w$

$d_w$

$l_{fr} = 0$   $y_w$

10

15

10

$y_{w0} = y_w = $ konst.

Fig. 1   $t_1$     $t_c$     $t_2$

Fig.2

Fig. 3

$y_w = konst.$

EP 0 096 411 B1

Fig. 4

EP 0 096 411 B1

Fig. 5

EP 0 096 411 B1

Fig. 6

Fig. 7

**Fig. 8**

Fig. 9

Fig. 10

Fig. 11

EP 0 096 411 B1

# Fig. 12

Fig. 13

Fig. 14

Fig. 15

Fig. 17

Fig. 16

Fig. 18

Fig 19